# EUROPEAN PATENT SPECIFICATION

(11) **EP 4 388 692 B1**
(45) Date of publication and mention of the grant of the patent: **18.11.2026**
(21) Application number: 21772946.6
(22) Date of filing: 18.08.2021
(51) Int. Cl.: H04L 1/18

(54) **METHOD AND APPARATUS TO AVOID NETWORK PRECODING ADJUSTMENT DURING BAND SHARING MSIM SCENARIOS**
VERFAHREN UND VORRICHTUNG ZUR VERMEIDUNG EINER NETZWERKVORCODIERUNGSEINSTELLUNG WÄHREND BANDTEILUNGS-MSIM-SZENARIEN
PROCÉDÉ ET APPAREIL POUR ÉVITER UN AJUSTEMENT DE PRÉCODAGE DE RÉSEAU PENDANT DES SCÉNARIOS MSIM DE PARTAGE DE BANDE

(43) Date of publication of application: 26.06.2024
(73) Proprietor: QUALCOMM INCORPORATED, San Diego, California 92121-1714 (US)
(72) Inventor: XIE, Ling, San Diego, California 92121-1714 (US); SHAHIDI, Reza, San Diego, California 92121-1714 (US); CHEN, Qingxin, San Diego, California 92121-1714 (US); MARINGANTI, Rahul, San Diego, California 92121-1714 (US); SRIVASTAVA, Ankur, San Diego, California 92121-1714 (US); MAJUMDER, Anindya, San Diego, California 92121-1714 (US); GANTI, Kamalakar, San Diego, California 92121-1714 (US); PALAKODETY, Sivaram Srivenkata, San Diego, California 92121-1714 (US); TRIPATHI, Ambarish, San Diego, California 92121-1714 (US); WU, Peng, San Diego, California 92121-1714 (US); MUKKERA, Krishna Chaitanya, San Diego, California 92121-1714 (US); SUN, Wei, San Diego, California 92121-1714 (US); LI, Yuyi, San Diego, California 92121-1714 (US); ASHRAF, Mohammad, San Diego, California 92121-1714 (US)
(74) Representative: Tomkins & Co
(86) International application number: PCT/CN2021/113250
(87) International publication number: WO 2023/019468

(56) References cited:
- US-A1- 2015 334 553
- US-A1- 2016 360 450
- US-A1- 2018 160 422

## Description

### BACKGROUND

### Technical Field

The present disclosure generally relates to communication systems, and more particularly, to a wireless communication system between a user equipment (UE) and a base station.

### Introduction

Wireless communication systems are widely deployed to provide various telecommunication services such as telephony, video, data, messaging, and broadcasts. Typical wireless communication systems may employ multiple-access technologies capable of supporting communication with multiple users by sharing available system resources. Examples of such multiple-access technologies include code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, and time division synchronous code division multiple access (TD-SCDMA) systems.

These multiple access technologies have been adopted in various telecommunication standards to provide a common protocol that enables different wireless devices to communicate on a municipal, national, regional, and even global level. An example telecommunication standard is 5G New Radio (NR). 5G NR is part of a continuous mobile broadband evolution promulgated by Third Generation Partnership Project (3GPP) to meet new requirements associated with latency, reliability, security, scalability (e.g., with Internet of Things (IoT)), and other requirements. 5G NR includes services associated with enhanced mobile broadband (eMBB), massive machine type communications (mMTC), and ultra-reliable low latency communications (URLLC). Some aspects of 5G NR may be based on the 4G Long Term Evolution (LTE) standard. There exists a need for further improvements in 5G NR technology. These improvements may also be applicable to other multi-access technologies and the telecommunication standards that employ these technologies.

United States Patent Application Publication No. US 2015/0334553 relates to radio link control status protocol data unit handling. United States Patent Application Publication No. US 2016/360450 relates to modifying periodic uplink transmissions to mitigate loss of information transmitted during tune away period.

### SUMMARY

The invention is defined by the subject-matter of the independent claims. Preferred embodiments are defined in the dependent claims.

### BRIEF DESCRIPTION OF THE DRAWINGS

FIG. 1 is a diagram illustrating an example of a wireless communications system and an access network.
FIG. 2A is a diagram illustrating an example of a first frame, in accordance with various aspects of the present disclosure.
FIG. 2B is a diagram illustrating an example of DL channels within a subframe, in accordance with various aspects of the present disclosure.
FIG. 2C is a diagram illustrating an example of a second frame, in accordance with various aspects of the present disclosure.
FIG. 2D is a diagram illustrating an example of UL channels within a subframe, in accordance with various aspects of the present disclosure.
FIG. 3 is a diagram illustrating an example of a base station and user equipment (UE) in an access network.
FIG. 4 is a diagram illustrating an example of SRS antenna switching suspended by a multi-SIM UE in one network while an activity is being performed by the UE in another network.
FIG. 5 is a diagram illustrating an example of an effect that suspending SRS antenna switching has on the redundancy version (RV) and modulation and coding scheme (MCS) of subsequent data transmissions.
FIG. 6 is a diagram illustrating a call flow between a multi-SIM UE and a base station.
FIG. 7 is a flowchart of a method of wireless communication.
FIG. 8 is a diagram illustrating an example of a hardware implementation for an example apparatus.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known structures and components are shown in block diagram form in order to avoid obscuring such concepts.

Many UEs support multiple Subscriber Identity Modules (SIMs) which allow UEs to communicate with different systems. For instance, a multi-SIM (MSIM) UE may include multiple SIMs, where each SIM is associated with a separate subscription to a respective mobile network. For example, a MSIM UE including two SIMs respectively associated with primary, data subscription (Sub1) and a secondary, non-data subscription (Sub2) may receive internet data using the first SIM in Sub 1 and voice calls using the second SIM in Sub2. Typically, MSIM UEs include common radio and baseband components (e.g., transceivers, RF chains, etc.) that are shared among the multiple SIMs, which may prevent the UE from actively communicating using multiple SIMs at the same time. Alternatively, some MSIM UEs may have multiple radio and baseband components for different SIMs which allow the UE to actively communicate using multiple SIMs at the same time.

A MSIM UE may transmit sounding reference signals (SRSs) to indicate information regarding channel quality to a base station. For instance, the MSIM UE may perform SRS antenna switching, where the UE may switch between different antenna ports to transmit SRS resources at different symbols. In response to the SRS, the base station may estimate channel quality and adjust parameters for subsequent resource scheduling based on the channel estimate. For example, the base station may modify a precoding applied to a transport block in a subsequent resource allocation (e.g., a precoder matrix), and provide information regarding this modified precoding in a downlink grant.

After a MSIM UE performs SRS antenna switching in one network (e.g., associated with Sub1), the UE may perform an activity in a different network (e.g., associated with Sub2). For example, the UE may monitor for paging requests, perform signal measurements, receive system information, or perform some other activity in the different network associated with Sub2. However, due to typical RF or hardware limitations of MSIM UEs (e.g., common radio or baseband components such as transceivers or RF circuitry shared between multiple subscriptions), the UE may not be capable of transmitting SRS over different antennas in one network while performing an activity in a different network simultaneously. Therefore, the MSIM UE may suspend the antenna switching (e.g., stop transmitting SRS over the different antennas) prior to performing the different network activity.

While the MSIM UE is monitoring or responding to a paging request on the Sub2 network, the channel conditions for the Sub1 network may change (e.g., in response to UE movement, interference, or other factors). However, since the MSIM UE has suspended SRS antenna switching in the Sub1 network during this time, the UE may not inform a base station in the Sub1 network of the change in channel conditions. Therefore, if the base station in the Sub1 network schedules and transmits data in PDSCH to the UE while SRS antenna switching is suspended, the base station may apply an incorrect precoding (or other parameter) in response to the lack of current SRS from the UE. As a result, the UE may fail to decode the PDSCH transmission from the base station (e.g., in response to a failed cyclic redundancy check (CRC)), and the UE may feedback a HARQ non-acknowledgment (HARQ-NACK) to the base station in response to the failed decoding. In response to the HARQ-NACK, the base station may retransmit the data with the same precoding or other parameters (due to the lack of current SRS), and again, the UE may fail to decode the retransmission and provide HARQ-NACK feedback. This process of the UE providing HARQ-NACK to the base station in response to un-decoded data transmissions may repeat over multiple, consecutive data transmissions until the UE eventually completes performing the activity in the Sub2 network, after which time the UE may resume SRS antenna switching in the Sub1 network. However, by the time the UE resumes SRS antenna switching, the base station in the Sub1 network may have incorrectly interpreted the consecutive HARQ-NACKs as indicating a high block error rate (BLER), and therefore the base station may adjust further data scheduling to compensate for this apparently high BLER by reducing the MCS of subsequent data transmissions. This reduced MCS may continue for subsequent data transmissions for a long time even after the UE has resumed SRS antenna switching, resulting in significantly decreased data throughput (e.g., 30% compared to the throughput prior to SRS antenna switching suspension).

One approach that may be applied to minimize throughput degradation is for the UE to feedback HARQ-ACK in response to the un-decoded data transmissions. Such HARQ-ACK may be referred to as a "fake" HARQ-ACK, since the UE does not actually decode the PDSCH transmission but nevertheless acknowledges the PDSCH transmission to the base station. For instance, while the UE is suspending SRS antenna switching in the Sub1 network to perform an activity in the Sub2 network, the UE may transmit fake HARQ-ACK in in the Sub1 network in response to each PDSCH transmission received from the base station in the Sub1 network. Since the base station in the Sub1 network accordingly receives HARQ-ACKs rather than HARQ-NACKs in response to the PDSCH transmissions, the base station may interpret (although erroneously) these PDSCH transmissions as being successfully decoded by the UE and consequently not reduce MCS in subsequent grants. As a result, data throughput in the Sub1 network may be improved.

However, such transmission of fake HARQ-ACKs (e.g., in response to every PDSCH transmission) may lead to large radio link control (RLC) holes. An RLC hole refers to a gap between a last RLC protocol data unit (PDU) actually decoded by the UE and an RLC PDU that is next up for transmission by the base station. Multiple such RLC holes (gaps between acknowledged and next to transmit RLC PDUs) may exist as a result of fake HARQ-ACKs. For example, in acknowledged mode (AM) RLC, a base station generally stores RLC PDUs with different sequence numbers in a re-transmission buffer, re-transmits non-acknowledged PDUs in that buffer to the UE, and removes acknowledged PDUs from the re-transmission buffer. As a result, if the UE transmits fake HARQ-ACK in response to RLC PDUs (e.g., un-decoded data transmissions), the base station may erroneously consider these data transmissions as properly acknowledged by the UE, even though the UE has not decoded these transmissions as described above. In such case, the base station may remove these "fake" acknowledged RLC PDUs from the re-transmission buffer, transmit subsequent RLC PDUs (with other sequence numbers), and forgo re-transmitting the prior RLC PDUs. Consequently, a significant hole or gap may result between the last acknowledged RLC PDU that was actually decoded by the UE, and the next RLC PDU which the base station plans to transmit. Similarly, multiple holes or gaps may result between acknowledged RLC PDUs and next RLC PDUs up for transmission.

To address the RLC hole(s), RLC status reports may be implemented in AM RLC. Generally, in AM RLC, a base station may store in a re-transmission buffer a copy of an RLC PDU transmitted to the UE, and the UE may store in a reception buffer a copy of the RLC PDU received from the base station. In response to receiving the RLC PDU, the UE may trigger a reassembly timer (e.g., a parameter *tReassembly* or some other name), during which time the UE may receive and store in the reception buffer received RLC PDUs and reassemble any RLC PDUs which include out-of-order sequence numbers. The base station may similarly transmit and store in the re-transmission buffer the transmitted RLC PDUs during this time. If the reassembly timer expires, the UE may send an RLC status report (e.g., a STATUS PDU) acknowledging received and successfully decoded RLC PDUs and indicating non-acknowledged (un-successfully decoded) RLC PDUs (e.g., by sequence number(s)). The UE may also trigger a status prohibit timer (e.g., a parameter *tStatusProhibit* or some other name) in response to sending the RLC status report, during which time the UE may be prohibited from sending further STATUS PDUs until the status prohibit timer expires. In response to the RLC status report, the base station may re-transmit the non-acknowledged PDUs to the UE, and the base station may remove the acknowledged PDUs from the re-transmission buffer. If the retransmissions are subsequently decoded and acknowledged by the UE, the size of the RLC hole(s) may be reduced. Alternatively, if previously non-acknowledged PDUs (prior to the RLC status report) or new non-acknowledged PDUs (in response to the retransmissions) still exist, the UE may send an additional RLC status report and the base station may again re-transmit non-acknowledged PDUs to the UE. This process may repeat over time until the RLC hole(s) are eliminated.

Thus, RLC status reports may serve to reduce RLC holes caused by fake HARQ-ACKs over time during SRS antenna switching suspension for MSIM UEs. The total time that may elapse before these RLC hole(s) are eliminated may be referred to as an RLC layer delay time. However, due to the long, fixed periodicity between RLC status reports (e.g., as controlled by the reassembly timer and status prohibit timer) and the large size of the RLC hole(s) (e.g., as a result of fake HARQ-ACK feedback in response to every un-decoded data transmission), the RLC layer delay time may be significant. Moreover, throughput may be degraded within the RLC layer delay time as well, for example, if the base station reduces MCS in response to subsequent HARQ-NACKs following resumed SRS antenna switching as described above.

Accordingly, notwithstanding the changes to downlink precoding caused by SRS antenna switching suspension, a MSIM UE may transmit a fake HARQ-ACK report during such suspension in order to relieve the network scheduling penalty on MCS resulting from such suspension. For example, the UE may transmit fake HARQ-ACK in response to each of the un-decoded data transmissions after suspending SRS antenna switching, thus resulting in the UE reporting less HARQ-NACK during the suspension and resulting in the base station terminating HARQ re-transmissions in response to such HARQ-NACKs. However, as transmission of fake HARQ-ACK in response to every un-decoded data transmission may lead to large RLC hole(s) as described above, aspects of the present disclosure allow the UE to control the amount of fake HARQ-ACKs to be transmitted. For example, during SRS antenna switching suspension, the UE may feedback fake HARQ-ACK according to a controlled pattern. In one aspect, the controlled pattern may involve the UE providing ACK feedback on a controlled percentage of downlink HARQ transmissions. In another aspect, the controlled pattern may involve the UE providing ACK and NACK feedback according to a controlled ratio. Thus, rather than transmitting fake HARQ-ACK in response to every un-decoded data transmissions, the UE may transmit fake HARQ-ACK in response to some of the un-decoded data transmissions, reducing the size of RLC hole(s).

In addition to the fake HARQ-ACK report, aspects of the present disclosure allow the UE to also transmit a controlled, RLC NACK report (e.g., an RLC status report indicating non-acknowledged RLC PDUs) in order to relieve RLC layer delay time and redundancy. For example, after transmitting an RLC status report indicating a non-acknowledged RLC PDU, the UE may adaptively accelerate or slow down a next RLC status report based on how quickly the UE receives a subsequent, retransmitted RLC PDU and based on the percentage that the retransmission reduces the RLC hole(s). In one aspect, the UE may generate and transmit non-acknowledgments in an RLC status report to a base station in a more aggressive manner by setting a smaller reassembly timer (e.g., *tReassembly*) or a smaller status prohibit timer (*tStatusProhibit*) than those set for a prior RLC status report. In another aspect, in response to sending a RLC status report indicating non-acknowledged RLC PDUs, the base station may re-transmit the non-acknowledged RLC PDUs, and the UE may control a subsequent RLC status report based on a comparison of a number of received RLC PDU retransmissions with the number of non-acknowledged RLC PDUs in the prior RLC status report. Thus, rather than transmitting RLC status reports with a fixed periodicity as previously described, the UE may transmit RLC status reports with different periodicities (e.g., shorter or longer time between RLC status reports) based on re-transmission timing or numbers, thus reducing the RLC layer delay time.

In an additional aspect, the UE may feedback fake HARQ-ACK in response to un-decoded data transmissions, according to any of the aforementioned controlled patterns, not only while SRS antenna switching is suspended, but also for a configured period of time after SRS antenna switching resumes. Moreover, in an additional aspect, the UE may transmit RLC status reports, controlled with different transmission periodicities according to any of the aforementioned factors described above, for a configured period of time after SRS antenna switching resumes. The configured period of time may represent a length of time after which any RLC hole(s) are completely filled in response to the fake HARQ-ACKs or RLC status reports with different transmission periodicities. Moreover, the UE may revert to HARQ-NACK feedback or default RLC status reports after this configured period of time for resource efficiency.

Several aspects of telecommunication systems will now be presented with reference to various apparatus and methods. These apparatus and methods will be described in the following detailed description and illustrated in the accompanying drawings by various blocks, components, circuits, processes, algorithms, etc. (collectively referred to as "elements"). These elements may be implemented using electronic hardware, computer software, or any combination thereof. Whether such elements are implemented as hardware or software depends upon the particular application and design constraints imposed on the overall system.

By way of example, an element, or any portion of an element, or any combination of elements may be implemented as a "processing system" that includes one or more processors. Examples of processors include microprocessors, microcontrollers, graphics processing units (GPUs), central processing units (CPUs), application processors, digital signal processors (DSPs), reduced instruction set computing (RISC) processors, systems on a chip (SoC), baseband processors, field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software components, applications, software applications, software packages, routines, subroutines, objects, executables, threads of execution, procedures, functions, etc., whether referred to as software, firmware, middleware, microcode, hardware description language, or otherwise.

Accordingly, in one or more example embodiments, the functions described may be implemented in hardware, software, or any combination thereof. If implemented in software, the functions may be stored on or encoded as one or more instructions or code on a computer-readable medium. Computer-readable media includes computer storage media. Storage media may be any available media that can be accessed by a computer. By way of example, and not limitation, such computer-readable media can comprise a random-access memory (RAM), a read-only memory (ROM), an electrically erasable programmable ROM (EEPROM), optical disk storage, magnetic disk storage, other magnetic storage devices, combinations of the aforementioned types of computer-readable media, or any other medium that can be used to store computer executable code in the form of instructions or data structures that can be accessed by a computer.

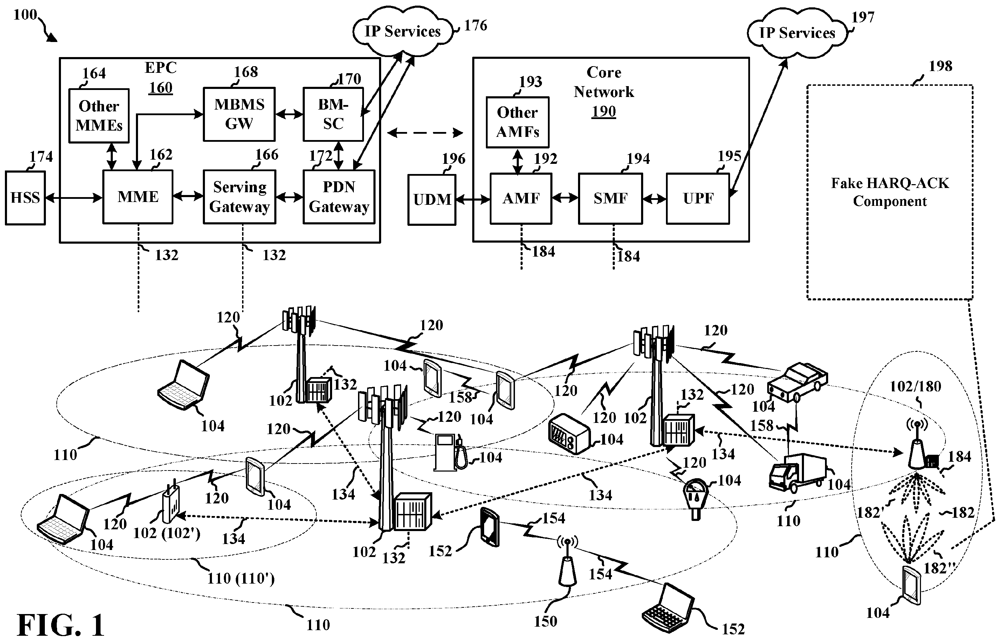

FIG. 1 is a diagram illustrating an example of a wireless communications system and an access network 100. The wireless communications system (also referred to as a wireless wide area network (WWAN)) includes base stations 102, user equipment(s) (UE) 104, an Evolved Packet Core (EPC) 160, and another core network 190 (e.g., a 5G Core (5GC)). The base stations 102 may include macrocells (high power cellular base station) and/or small cells (low power cellular base station). The macrocells include base stations. The small cells include femtocells, picocells, and microcells.

The base stations 102 configured for 4G Long Term Evolution (LTE) (collectively referred to as Evolved Universal Mobile Telecommunications System (UMTS) Terrestrial Radio Access Network (E-UTRAN)) may interface with the EPC 160 through first backhaul links 132 (e.g., S1 interface). The base stations 102 configured for 5G New Radio (NR) (collectively referred to as Next Generation RAN (NG-RAN)) may interface with core network 190 through second backhaul links 184. In addition to other functions, the base stations 102 may perform one or more of the following functions: transfer of user data, radio channel ciphering and deciphering, integrity protection, header compression, mobility control functions (e.g., handover, dual connectivity), inter-cell interference coordination, connection setup and release, load balancing, distribution for non-access stratum (NAS) messages, NAS node selection, synchronization, radio access network (RAN) sharing, Multimedia Broadcast Multicast Service (MBMS), subscriber and equipment trace, RAN information management (RIM), paging, positioning, and delivery of warning messages. The base stations 102 may communicate directly or indirectly (e.g., through the EPC 160 or core network 190) with each other over third backhaul links 134 (e.g., X2 interface). The first backhaul links 132, the second backhaul links 184, and the third backhaul links 134 may be wired or wireless.

The base stations 102 may wirelessly communicate with the UEs 104. Each of the base stations 102 may provide communication coverage for a respective geographic coverage area 110. There may be overlapping geographic coverage areas 110. For example, the small cell 102' may have a coverage area 110' that overlaps the coverage area 110 of one or more macro base stations 102. A network that includes both small cell and macrocells may be known as a heterogeneous network. A heterogeneous network may also include Home Evolved Node Bs (eNBs) (HeNBs), which may provide service to a restricted group known as a closed subscriber group (CSG). The communication links 120 between the base stations 102 and the UEs 104 may include uplink (UL) (also referred to as reverse link) transmissions from a UE 104 to a base station 102 and/or downlink (DL) (also referred to as forward link) transmissions from a base station 102 to a UE 104. The communication links 120 may use multiple-input and multiple-output (MIMO) antenna technology, including spatial multiplexing, beamforming, and/or transmit diversity. The communication links may be through one or more carriers. The base stations 102 / UEs 104 may use spectrum up to Y megahertz (MHz) (e.g., 5, 10, 15, 20, 100, 400, etc. MHz) bandwidth per carrier allocated in a carrier aggregation of up to a total of *Yx* MHz (*x* component carriers) used for transmission in each direction. The carriers may or may not be adjacent to each other. Allocation of carriers may be asymmetric with respect to DL and UL (e.g., more or fewer carriers may be allocated for DL than for UL). The component carriers may include a primary component carrier and one or more secondary component carriers. A primary component carrier may be referred to as a primary cell (PCell) and a secondary component carrier may be referred to as a secondary cell (SCell).

Certain UEs 104 may communicate with each other using device-to-device (D2D) communication link 158. The D2D communication link 158 may use the DL/UL WWAN spectrum. The D2D communication link 158 may use one or more sidelink channels, such as a physical sidelink broadcast channel (PSBCH), a physical sidelink discovery channel (PSDCH), a physical sidelink shared channel (PSSCH), and a physical sidelink control channel (PSCCH). D2D communication may be through a variety of wireless D2D communications systems, such as for example, WiMedia, Bluetooth, ZigBee, Wi-Fi based on the Institute of Electrical and Electronics Engineers (IEEE) 802.11 standard, LTE, or NR.

The wireless communications system may further include a Wi-Fi access point (AP) 150 in communication with Wi-Fi stations (STAs) 152 via communication links 154, e.g., in a 5 gigahertz (GHz) unlicensed frequency spectrum or the like. When communicating in an unlicensed frequency spectrum, the STAs 152 / AP 150 may perform a clear channel assessment (CCA) prior to communicating in order to determine whether the channel is available.

The small cell 102' may operate in a licensed and/or an unlicensed frequency spectrum. When operating in an unlicensed frequency spectrum, the small cell 102' may employ NR and use the same unlicensed frequency spectrum (e.g., 5 GHz, or the like) as used by the Wi-Fi AP 150. The small cell 102', employing NR in an unlicensed frequency spectrum, may boost coverage to and/or increase capacity of the access network.

The electromagnetic spectrum is often subdivided, based on frequency/wavelength, into various classes, bands, channels, etc. In 5G NR, two initial operating bands have been identified as frequency range designations FR1 (410 MHz - 7.125 GHz) and FR2 (24.25 GHz - 52.6 GHz). The frequencies between FR1 and FR2 are often referred to as mid-band frequencies. Although a portion of FR1 is greater than 6 GHz, FR1 is often referred to (interchangeably) as a "sub-6 GHz" band in various documents and articles. A similar nomenclature issue sometimes occurs with regard to FR2, which is often referred to (interchangeably) as a "millimeter wave" band in documents and articles, despite being different from the extremely high frequency (EHF) band (30 GHz - 300 GHz) which is identified by the International Telecommunications Union (ITU) as a "millimeter wave" band.

With the above aspects in mind, unless specifically stated otherwise, it should be understood that the term "sub-6 GHz" or the like if used herein may broadly represent frequencies that may be less than 6 GHz, may be within FR1, or may include mid-band frequencies. Further, unless specifically stated otherwise, it should be understood that the term "millimeter wave" or the like if used herein may broadly represent frequencies that may include mid-band frequencies, may be within FR2, or may be within the EHF band.

A base station 102, whether a small cell 102' or a large cell (e.g., macro base station), may include and/or be referred to as an eNB, gNodeB (gNB), or another type of base station. Some base stations, such as gNB 180 may operate in a traditional sub 6 GHz spectrum, in millimeter wave frequencies, and/or near millimeter wave frequencies in communication with the UE 104. When the gNB 180 operates in millimeter wave or near millimeter wave frequencies, the gNB 180 may be referred to as a millimeter wave base station. The millimeter wave base station 180 may utilize beamforming 182 with the UE 104 to compensate for the path loss and short range. The base station 180 and the UE 104 may each include a plurality of antennas, such as antenna elements, antenna panels, and/or antenna arrays to facilitate the beamforming.

The base station 180 may transmit a beamformed signal to the UE 104 in one or more transmit directions 182'. The UE 104 may receive the beamformed signal from the base station 180 in one or more receive directions 182". The UE 104 may also transmit a beamformed signal to the base station 180 in one or more transmit directions. The base station 180 may receive the beamformed signal from the UE 104 in one or more receive directions. The base station 180 / UE 104 may perform beam training to determine the best receive and transmit directions for each of the base station 180 / UE 104. The transmit and receive directions for the base station 180 may or may not be the same. The transmit and receive directions for the UE 104 may or may not be the same.

The EPC 160 may include a Mobility Management Entity (MME) 162, other MMEs 164, a Serving Gateway 166, an MBMS Gateway 168, a Broadcast Multicast Service Center (BM-SC) 170, and a Packet Data Network (PDN) Gateway 172. The MME 162 may be in communication with a Home Subscriber Server (HSS) 174. The MME 162 is the control node that processes the signaling between the UEs 104 and the EPC 160. Generally, the MME 162 provides bearer and connection management. All user Internet protocol (IP) packets are transferred through the Serving Gateway 166, which itself is connected to the PDN Gateway 172. The PDN Gateway 172 provides UE IP address allocation as well as other functions. The PDN Gateway 172 and the BM-SC 170 are connected to the IP Services 176. The IP Services 176 may include the Internet, an intranet, an IP Multimedia Subsystem (IMS), a PS Streaming Service, and/or other IP services. The BM-SC 170 may provide functions for MBMS user service provisioning and delivery. The BM-SC 170 may serve as an entry point for content provider MBMS transmission, may be used to authorize and initiate MBMS Bearer Services within a public land mobile network (PLMN), and may be used to schedule MBMS transmissions. The MBMS Gateway 168 may be used to distribute MBMS traffic to the base stations 102 belonging to a Multicast Broadcast Single Frequency Network (MBSFN) area broadcasting a particular service, and may be responsible for session management (start/stop) and for collecting eMBMS related charging information.

The core network 190 may include a Access and Mobility Management Function (AMF) 192, other AMFs 193, a Session Management Function (SMF) 194, and a User Plane Function (UPF) 195. The AMF 192 may be in communication with a Unified Data Management (UDM) 196. The AMF 192 is the control node that processes the signaling between the UEs 104 and the core network 190. Generally, the AMF 192 provides Quality of Service (QoS) flow and session management. All user IP packets are transferred through the UPF 195. The UPF 195 provides UE IP address allocation as well as other functions. The UPF 195 is connected to the IP Services 197. The IP Services 197 may include the Internet, an intranet, an IMS, a Packet Switch (PS) Streaming Service, and/or other IP services.

The base station may include and/or be referred to as a gNB, Node B, eNB, an access point, a base transceiver station, a radio base station, a radio transceiver, a transceiver function, a basic service set (BSS), an extended service set (ESS), a transmit reception point (TRP), or some other suitable terminology. The base station 102 provides an access point to the EPC 160 or core network 190 for a UE 104. Examples of UEs 104 include a cellular phone, a smart phone, a session initiation protocol (SIP) phone, a laptop, a personal digital assistant (PDA), a satellite radio, a global positioning system, a multimedia device, a video device, a digital audio player (e.g., MP3 player), a camera, a game console, a tablet, a smart device, a wearable device, a vehicle, an electric meter, a gas pump, a large or small kitchen appliance, a healthcare device, an implant, a sensor/actuator, a display, or any other similar functioning device. Some of the UEs 104 may be referred to as IoT devices (e.g., parking meter, gas pump, toaster, vehicles, heart monitor, etc.). The UE 104 may also be referred to as a station, a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or some other suitable terminology.

Although the present disclosure may focus on 5G NR, the concepts and various aspects described herein may be applicable to other similar areas, such as LTE, LTE-Advanced (LTE-A), Code Division Multiple Access (CDMA), Global System for Mobile communications (GSM), or other wireless/radio access technologies.

Referring again to FIG. 1, in certain aspects, the UE 104 may include a fake HARQ-ACK component 198 that is configured to send a plurality of SRSs to a base station in a first network using a first SIM of the UE, where each of the SRSs is sent using a different antenna. The fake HARQ-ACK component is further configured to suspend SRS transmission from the different antennas while performing an activity in a second network using a second SIM of the UE, and to send a HARQ-ACK to the base station while the SRS transmission is suspended in response to at least one of a plurality of un-decoded data transmissions from the base station.

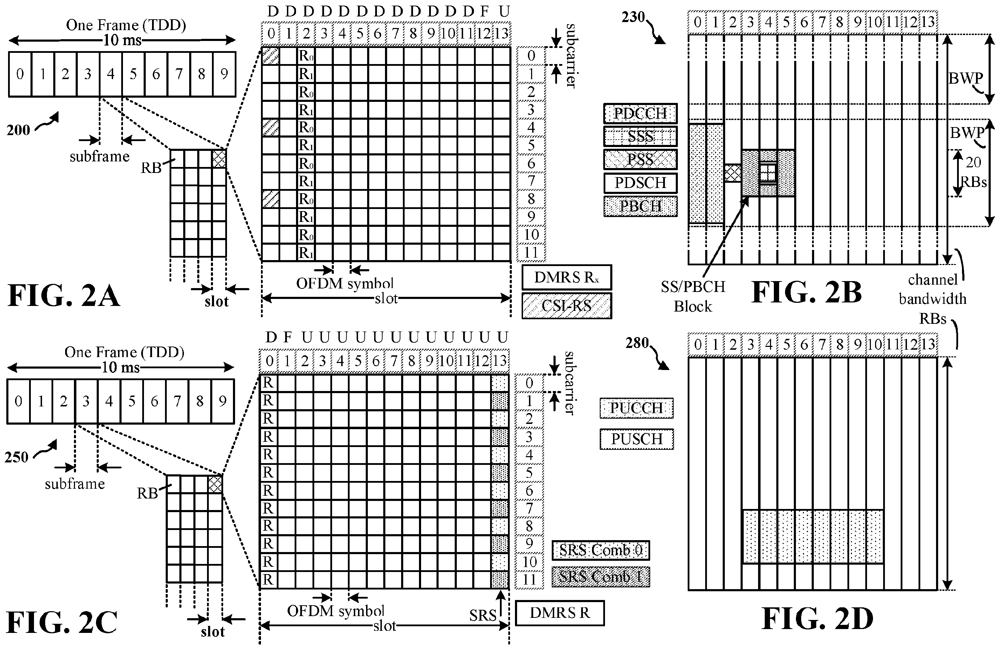

FIG. 2A is a diagram 200 illustrating an example of a first subframe within a 5G NR frame structure. FIG. 2B is a diagram 230 illustrating an example of DL channels within a 5G NR subframe. FIG. 2C is a diagram 250 illustrating an example of a second subframe within a 5G NR frame structure. FIG. 2D is a diagram 280 illustrating an example of UL channels within a 5G NR subframe. The 5G NR frame structure may be frequency division duplexed (FDD) in which for a particular set of subcarriers (carrier system bandwidth), subframes within the set of subcarriers are dedicated for either DL or UL, or may be time division duplexed (TDD) in which for a particular set of subcarriers (carrier system bandwidth), subframes within the set of subcarriers are dedicated for both DL and UL. In the examples provided by FIGs. 2A, 2C, the 5G NR frame structure is assumed to be TDD, with subframe 4 being configured with slot format 28 (with mostly DL), where D is DL, U is UL, and F is flexible for use between DL/UL, and subframe 3 being configured with slot format 34 (with mostly UL). While subframes 3, 4 are shown with slot formats 34, 28, respectively, any particular subframe may be configured with any of the various available slot formats 0-61. Slot formats 0, 1 are all DL, UL, respectively. Other slot formats 2-61 include a mix of DL, UL, and flexible symbols. UEs are configured with the slot format (dynamically through DL control information (DCI), or semi-statically/statically through radio resource control (RRC) signaling) through a received slot format indicator (SFI). Note that the description *infra* applies also to a 5G NR frame structure that is TDD.

Other wireless communication technologies may have a different frame structure and/or different channels. A frame, e.g., of 10 milliseconds (ms), may be divided into 10 equally sized subframes (1 ms). Each subframe may include one or more time slots. Subframes may also include mini-slots, which may include 7, 4, or 2 symbols. Each slot may include 7 or 14 symbols, depending on the slot configuration. For slot configuration 0, each slot may include 14 symbols, and for slot configuration 1, each slot may include 7 symbols. The symbols on DL may be cyclic prefix (CP) orthogonal frequency-division multiplexing (OFDM) (CP-OFDM) symbols. The symbols on UL may be CP-OFDM symbols (for high throughput scenarios) or discrete Fourier transform (DFT) spread OFDM (DFT-s-OFDM) symbols (also referred to as single carrier frequency-division multiple access (SC-FDMA) symbols) (for power limited scenarios; limited to a single stream transmission). The number of slots within a subframe is based on the slot configuration and the numerology. For slot configuration 0, different numerologies µ 0 to 4 allow for 1, 2, 4, 8, and 16 slots, respectively, per subframe. For slot configuration 1, different numerologies 0 to 2 allow for 2, 4, and 8 slots, respectively, per subframe. Accordingly, for slot configuration 0 and numerology µ, there are 14 symbols/slot and 2^{µ} slots/subframe. The subcarrier spacing and symbol length/duration are a function of the numerology. The subcarrier spacing may be equal to 2*^{µ}* * 15 kilohertz (kHz), where *µ* is the numerology 0 to 4. As such, the numerology µ=0 has a subcarrier spacing of 15 kHz and the numerology µ=4 has a subcarrier spacing of 240 kHz. The symbol length/duration is inversely related to the subcarrier spacing. FIGs. 2A-2D provide an example of slot configuration 0 with 14 symbols per slot and numerology µ=2 with 4 slots per subframe. The slot duration is 0.25 ms, the subcarrier spacing is 60 kHz, and the symbol duration is approximately 16.67 µs. Within a set of frames, there may be one or more different bandwidth parts (BWPs) (see FIG. 2B) that are frequency division multiplexed. Each BWP may have a particular numerology.

A resource grid may be used to represent the frame structure. Each time slot includes a resource block (RB) (also referred to as physical RBs (PRBs)) that extends 12 consecutive subcarriers. The resource grid is divided into multiple resource elements (REs). The number of bits carried by each RE depends on the modulation scheme.

As illustrated in FIG. 2A, some of the REs carry reference (pilot) signals (RS) for the UE. The RS may include demodulation RS (DM-RS) (indicated as Rₓ for one particular configuration, where 100x is the port number, but other DM-RS configurations are possible) and channel state information reference signals (CSI-RS) for channel estimation at the UE. The RS may also include beam measurement RS (BRS), beam refinement RS (BRRS), and phase tracking RS (PT-RS).

FIG. 2B illustrates an example of various DL channels within a subframe of a frame. The physical downlink control channel (PDCCH) carries DCI within one or more control channel elements (CCEs), each CCE including nine RE groups (REGs), each REG including four consecutive REs in an OFDM symbol. A PDCCH within one BWP may be referred to as a control resource set (CORESET). Additional BWPs may be located at greater and/or lower frequencies across the channel bandwidth. A primary synchronization signal (PSS) may be within symbol 2 of particular subframes of a frame. The PSS is used by a UE 104 to determine subframe/symbol timing and a physical layer identity. A secondary synchronization signal (SSS) may be within symbol 4 of particular subframes of a frame. The SSS is used by a UE to determine a physical layer cell identity group number and radio frame timing. Based on the physical layer identity and the physical layer cell identity group number, the UE can determine a physical cell identifier (PCI). Based on the PCI, the UE can determine the locations of the aforementioned DM-RS. The physical broadcast channel (PBCH), which carries a master information block (MIB), may be logically grouped with the PSS and SSS to form a synchronization signal (SS)/PBCH block (also referred to as SS block (SSB)). The MIB provides a number of RBs in the system bandwidth and a system frame number (SFN). The physical downlink shared channel (PDSCH) carries user data, broadcast system information not transmitted through the PBCH such as system information blocks (SIBs), and paging messages.

As illustrated in FIG. 2C, some of the REs carry DM-RS (indicated as R for one particular configuration, but other DM-RS configurations are possible) for channel estimation at the base station. The UE may transmit DM-RS for the physical uplink control channel (PUCCH) and DM-RS for the physical uplink shared channel (PUSCH). The PUSCH DM-RS may be transmitted in the first one or two symbols of the PUSCH. The PUCCH DM-RS may be transmitted in different configurations depending on whether short or long PUCCHs are transmitted and depending on the particular PUCCH format used. The UE may transmit sounding reference signals (SRS). The SRS may be transmitted in the last symbol of a subframe. The SRS may have a comb structure, and a UE may transmit SRS on one of the combs. The SRS may be used by a base station for channel quality estimation to enable frequency-dependent scheduling on the UL.

FIG. 2D illustrates an example of various UL channels within a subframe of a frame. The PUCCH may be located as indicated in one configuration. The PUCCH carries uplink control information (UCI), such as scheduling requests, a channel quality indicator (CQI), a precoding matrix indicator (PMI), a rank indicator (RI), and hybrid automatic repeat request (HARQ) acknowledgement (ACK) / non-acknowledgement (NACK) feedback. The PUSCH carries data, and may additionally be used to carry a buffer status report (BSR), a power headroom report (PHR), and/or UCI.

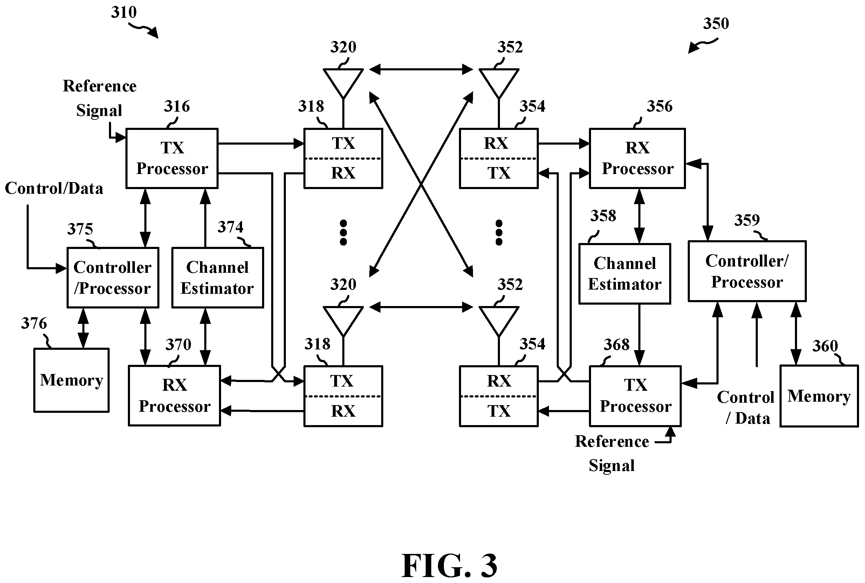

FIG. 3 is a block diagram of a base station 310 in communication with a UE 350 in an access network. In the DL, IP packets from the EPC 160 may be provided to a controller/processor 375. The controller/processor 375 implements layer 3 and layer 2 functionality. Layer 3 includes a radio resource control (RRC) layer, and layer 2 includes a service data adaptation protocol (SDAP) layer, a packet data convergence protocol (PDCP) layer, a radio link control (RLC) layer, and a medium access control (MAC) layer. The controller/processor 375 provides RRC layer functionality associated with broadcasting of system information (e.g., MIB, SIBs), RRC connection control (e.g., RRC connection paging, RRC connection establishment, RRC connection modification, and RRC connection release), inter radio access technology (RAT) mobility, and measurement configuration for UE measurement reporting; PDCP layer functionality associated with header compression / decompression, security (ciphering, deciphering, integrity protection, integrity verification), and handover support functions; RLC layer functionality associated with the transfer of upper layer packet data units (PDUs), error correction through ARQ, concatenation, segmentation, and reassembly of RLC service data units (SDUs), re-segmentation of RLC data PDUs, and reordering of RLC data PDUs; and MAC layer functionality associated with mapping between logical channels and transport channels, multiplexing of MAC SDUs onto transport blocks (TBs), demultiplexing of MAC SDUs from TBs, scheduling information reporting, error correction through HARQ, priority handling, and logical channel prioritization.

The transmit (TX) processor 316 and the receive (RX) processor 370 implement layer 1 functionality associated with various signal processing functions. Layer 1, which includes a physical (PHY) layer, may include error detection on the transport channels, forward error correction (FEC) coding/decoding of the transport channels, interleaving, rate matching, mapping onto physical channels, modulation/demodulation of physical channels, and MIMO antenna processing. The TX processor 316 handles mapping to signal constellations based on various modulation schemes (e.g., binary phase-shift keying (BPSK), quadrature phase-shift keying (QPSK), M-phase-shift keying (M-PSK), M-quadrature amplitude modulation (M-QAM)). The coded and modulated symbols may then be split into parallel streams. Each stream may then be mapped to an OFDM subcarrier, multiplexed with a reference signal (e.g., pilot) in the time and/or frequency domain, and then combined together using an Inverse Fast Fourier Transform (IFFT) to produce a physical channel carrying a time domain OFDM symbol stream. The OFDM stream is spatially precoded to produce multiple spatial streams. Channel estimates from a channel estimator 374 may be used to determine the coding and modulation scheme, as well as for spatial processing. The channel estimate may be derived from a reference signal and/or channel condition feedback transmitted by the UE 350. Each spatial stream may then be provided to a different antenna 320 via a separate transmitter 318TX. Each transmitter 318TX may modulate an RF carrier with a respective spatial stream for transmission.

At the UE 350, each receiver 354RX receives a signal through its respective antenna 352. Each receiver 354RX recovers information modulated onto an RF carrier and provides the information to the receive (RX) processor 356. The TX processor 368 and the RX processor 356 implement layer 1 functionality associated with various signal processing functions. The RX processor 356 may perform spatial processing on the information to recover any spatial streams destined for the UE 350. If multiple spatial streams are destined for the UE 350, they may be combined by the RX processor 356 into a single OFDM symbol stream. The RX processor 356 then converts the OFDM symbol stream from the time-domain to the frequency domain using a Fast Fourier Transform (FFT). The frequency domain signal comprises a separate OFDM symbol stream for each subcarrier of the OFDM signal. The symbols on each subcarrier, and the reference signal, are recovered and demodulated by determining the most likely signal constellation points transmitted by the base station 310. These soft decisions may be based on channel estimates computed by the channel estimator 358. The soft decisions are then decoded and deinterleaved to recover the data and control signals that were originally transmitted by the base station 310 on the physical channel. The data and control signals are then provided to the controller/processor 359, which implements layer 3 and layer 2 functionality.

The controller/processor 359 can be associated with a memory 360 that stores program codes and data. The memory 360 may be referred to as a computer-readable medium. In the UL, the controller/processor 359 provides demultiplexing between transport and logical channels, packet reassembly, deciphering, header decompression, and control signal processing to recover IP packets from the EPC 160. The controller/processor 359 is also responsible for error detection using an ACK and/or NACK protocol to support HARQ operations.

Similar to the functionality described in connection with the DL transmission by the base station 310, the controller/processor 359 provides RRC layer functionality associated with system information (e.g., MIB, SIBs) acquisition, RRC connections, and measurement reporting; PDCP layer functionality associated with header compression / decompression, and security (ciphering, deciphering, integrity protection, integrity verification); RLC layer functionality associated with the transfer of upper layer PDUs, error correction through ARQ, concatenation, segmentation, and reassembly of RLC SDUs, re-segmentation of RLC data PDUs, and reordering of RLC data PDUs; and MAC layer functionality associated with mapping between logical channels and transport channels, multiplexing of MAC SDUs onto TBs, demultiplexing of MAC SDUs from TBs, scheduling information reporting, error correction through HARQ, priority handling, and logical channel prioritization.

Channel estimates derived by a channel estimator 358 from a reference signal or feedback transmitted by the base station 310 may be used by the TX processor 368 to select the appropriate coding and modulation schemes, and to facilitate spatial processing. The spatial streams generated by the TX processor 368 may be provided to different antenna 352 via separate transmitters 354TX. Each transmitter 354TX may modulate an RF carrier with a respective spatial stream for transmission.

The UL transmission is processed at the base station 310 in a manner similar to that described in connection with the receiver function at the UE 350. Each receiver 318RX receives a signal through its respective antenna 320. Each receiver 318RX recovers information modulated onto an RF carrier and provides the information to a RX processor 370.

The controller/processor 375 can be associated with a memory 376 that stores program codes and data. The memory 376 may be referred to as a computer-readable medium. In the UL, the controller/processor 375 provides demultiplexing between transport and logical channels, packet reassembly, deciphering, header decompression, control signal processing to recover IP packets from the UE 350. IP packets from the controller/processor 375 may be provided to the EPC 160. The controller/processor 375 is also responsible for error detection using an ACK and/or NACK protocol to support HARQ operations.

At least one of the TX processor 368, the RX processor 356, and the controller/processor 359 may be configured to perform aspects in connection with fake HARQ-ACK component 198 of FIG. 1.

Many UEs support multiple Subscriber Identity Modules (SIMs) which allow UEs to communicate with different systems. For example, a UE incorporating a travel SIM card connected to one PLMN may receive local calls in one country while receiving international calls associated with a different PLMN in another country. Typically, multi-SIM (MSIM) UEs include common radio and baseband components (e.g., transceivers, RF chains, etc.) that are shared among the multiple SIMs, which may prevent the UE from actively communicating using multiple SIMs at the same time. Therefore, while actively communicating using a first SIM, such MSIM UEs may suspend the connection of the first SIM to perform an activity in a different system associated with the second SIM, such as occasionally monitoring for paging requests from the different system associated with a second SIM. Alternatively, some MSIM UEs may have multiple radio and baseband components for different SIMs which allow the UE to actively communicate using multiple SIMs at the same time.

Each SIM of a MSIM UE may be associated with a separate subscription to a respective mobile network. For example, a first SIM supporting a connection with one PLMN may be associated with a data subscription which the UE selects to receive data from a network (e.g. internet data such as video and gaming), while a second SIM supporting a connection with another PLMN may be associated with a non-data subscription which the UE selects to receive voice calls from a network. In such case, a MSIM UE including two SIMs respectively associated with data subscription and a non-data subscription may receive internet data using the first SIM in a primary subscription (Sub1) and voice calls using the second SIM in a secondary subscription (Sub2). Alternatively, a MSIM UE may include multiple data subscriptions (e.g., receive internet data in Sub1 and Sub2), multiple non-data subscriptions (e.g., receive voice calls in Sub1 and Sub2), or some other combination of data and non-data subscriptions (e.g., receive voice calls in Sub1 and internet data in Sub2).

A MSIM UE may transmit sounding reference signals (SRSs) to a base station. A SRS is a reference signal which indicates information to the base station regarding channel quality. For example, the SRS may inform the base station of effects such as multipath fading, scattering, Doppler effects, and transmission power loss. In response to the SRS, the base station may estimate channel quality and adjust parameters for subsequent resource scheduling based on the channel estimate. For example, the base station may modify a precoding applied to a transport block in a subsequent resource allocation (e.g., a precoder matrix), and provide information regarding this modified precoding in a downlink grant.

The MSIM UE may perform SRS antenna switching. For example, based on a configuration provided by the base station (e.g., an RRC parameter *SRS-ResourceSet* or some other name), the SRS may apply at least one of the following modes for SRS antenna switching: 1T2R, 1T4R, 2T4R, or T=R. In 1T2R mode, the UE may transmit two SRS resources at different symbols in up to two SRS resource sets, where each SRS resource is of a single SRS port and associated with a different UE antenna port. For example, a UE performing SRS antenna switching in 1T2R may transmit a first SRS resource in a first symbol associated with SRS port 0 from a first antenna, and a second SRS resource in a second symbol associated with SRS port 0 from a second antenna. In 1T4R mode, the UE may transmit four SRS resources at different symbols in up to one SRS resource set, where each SRS resource is of a single SRS port and associated with a different UE antenna port. For example, a UE performing SRS antenna switching in 1T4R may transmit a first SRS resource in a first symbol associated with SRS port 0 from a first antenna, a second SRS resource in a second symbol associated with SRS port 0 from a second antenna, a third SRS resource in a third symbol associated with SRS port 0 from a third antenna, and a fourth SRS resource in a fourth symbol associated with SRS port 0 from a fourth antenna. In 2T4R mode, the UE may transmit two SRS resources at different symbols in up to two SRS resource sets, where each SRS resource is of two SRS ports and associated with different UE antenna ports. For example, a UE performing SRS antenna switching in 2T4R may transmit a first SRS resource in a first symbol associated with SRS port 0 from a first antenna, a second SRS resource in a second symbol associated with SRS port 0 from a second antenna, a third SRS resource in a third symbol associated with SRS port 1 (which may be the same as the first symbol) from a third antenna, and a fourth SRS resource in a fourth symbol associated with SRS port 1 (which may be the same as the second symbol) from a fourth antenna. In T=R mode, the UE may similarly transmit SRS resources in up to two SRS resource sets, where each SRS resource is of either 1, 2, or 4 SRS ports.

After a MSIM UE performs SRS antenna switching (e.g., in either the 1T2R, 1T4R, 2T4R, or T=R mode as described above) in one network (e.g., associated with Sub1), the UE may perform an activity in a different network (e.g., associated with Sub2). For example, the UE may monitor for paging requests, perform signal measurements, receive system information, or perform some other activity in the different network associated with Sub2. However, due to typical RF or hardware limitations of MSIM UEs (e.g., common radio or baseband components such as transceivers or RF circuitry shared between multiple subscriptions), the UE may not be capable of transmitting SRS over different antennas in one network while performing an activity in a different network simultaneously. Therefore, the MSIM UE may suspend the antenna switching (e.g., stop transmitting SRS over the different antennas) prior to performing the different network activity.

While the MSIM UE is monitoring or responding to a paging request on the Sub2 network, the channel conditions for the Sub1 network may change (e.g., in response to UE movement, interference, or other factors). However, since the MSIM UE has suspended SRS antenna switching in the Sub1 network during this time, the UE may not inform a base station in the Sub1 network of the change in channel conditions. Therefore, if the base station in the Sub1 network schedules and transmits data in PDSCH to the UE while SRS antenna switching is suspended, the base station may apply an incorrect precoding (or other parameter) in response to the lack of current SRS from the UE. As a result, the UE may fail to decode the PDSCH transmission from the base station (e.g., in response to a failed cyclic redundancy check (CRC)), and the UE may feedback a HARQ non-acknowledgment (HARQ-NACK) to the base station in response to the failed decoding. In response to the HARQ-NACK, the base station may retransmit the data with the same precoding or other parameters (due to the lack of current SRS), and again, the UE may fail to decode the retransmission and provide HARQ-NACK feedback. This process of the UE providing HARQ-NACK to the base station in response to un-decoded data transmissions may repeat over multiple, consecutive data transmissions until the UE eventually completes performing the activity in the Sub2 network, after which time the UE may resume SRS antenna switching in the Sub1 network. However, by the time the UE resumes SRS antenna switching, the base station in the Sub1 network may have incorrectly interpreted the consecutive HARQ-NACKs as indicating a high block error rate (BLER), and therefore the base station may adjust further data scheduling to compensate for this apparently high BLER by reducing the MCS of subsequent data transmissions. This reduced MCS may continue for subsequent data transmissions for a long time even after the UE has resumed SRS antenna switching, resulting in significantly decreased data throughput (e.g., 30% compared to the throughput prior to SRS antenna switching suspension).

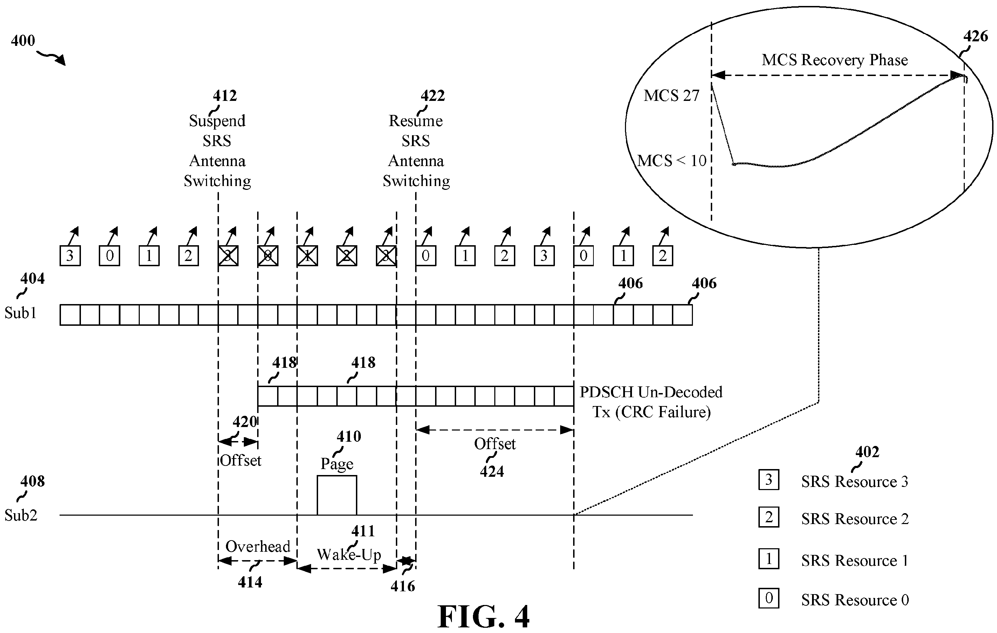

FIG. 4 illustrates an example 400 of SRS antenna switching suspended by a multi-SIM UE in one network while an activity is being performed by the UE in another network. Initially, the UE transmits SRS resources 402 to a base station in a Sub1 network 404 in different slots 406. For instance, in the illustrated example of FIG. 4, the UE may perform SRS antenna switching in the 1T4R mode such that the UE periodically transmits SRS resource 3 in one slot, followed by SRS resource 0 in another slot, next by SRS resource 1 in a further slot, and then by SRS resource 2 in a following slot. Before the UE switches to Sub2 network 408 to perform an activity, such as monitoring for a page 410 during a wake-up interval 411 as illustrated in FIG. 4, the UE may suspend SRS antenna switching (e.g., at time 412). For instance, in response to suspending SRS antenna switching at time 412, the UE may switch to the Sub2 network 408 after a time 414 associated with Sub 1-to-Sub2 switching overhead (e.g., RF transceiver frequency tuning and DRX off duration), next wake up its receiver to monitor for page 410, and then switch back to Sub1 network 404 after a time 416 associated with Sub2-to-Sub1 switching overhead.

While the UE is switching to and from the Sub2 network 408 or monitoring for page 410 in the Sub2 network, the UE may receive PDSCH transmissions 418 from a base station in the Sub1 network 404. However, due to the SRS antenna switching suspension beginning at time 412, the base station may apply incorrect precoding or other scheduling parameters to the PDSCH transmissions (e.g., beginning after time offset 420), and therefore the UE may fail to decode these PDSCH transmissions in the Sub1 network 404. For example, when the UE receives one of the PDSCH transmissions 418 including an appended CRC, the UE may perform a CRC check by calculating a CRC from the PDSCH transmission and comparing it with the appended CRC, and the UE may determine a decoding failure for that PDSCH transmission in response to a mismatch between the calculated CRC and the appended CRC (e.g., due to incorrect precoding applied to the PDSCH transmission at the base station). As a result, the UE may report a HARQ NACK to the base station in response to the un-decoded PDSCH transmission. Such decoding failures and corresponding HARQ NACK feedback may continue for multiple PDSCH transmissions 418 which the base station sends while SRS antenna switching is suspended.

Moreover, even after the UE completes page monitoring, switches back from the Sub2 network 408 to the Sub1 network 404, and resumes SRS antenna switching at time 422, the base station may still not correct the precoding or other scheduling parameter for some time (e.g., until after another time offset 424). Thus, the PDSCH transmissions 418 received during this time may still include CRC errors and fail to decode, and as a result, the UE may continue to send HARQ NACKs to the base station well after SRS antenna switching resumes. Furthermore, due to the consecutive HARQ NACKs received at the base station, the base station may adjust MCS to compensate for the failed transmissions (e.g., from MCS 27 to less than 10 as illustrated for example at plot 426). Although the drop in MCS may allow the UE to successfully decode subsequent PDSCH transmissions and thus send HARQ ACKs to the base station accordingly (e.g., after time offset 424), a long amount of time may pass before the base station eventually recovers the MCS back to its previous state in response to the HARQ ACKs (e.g., as illustrated in plot 426). Thus, data throughput in the Sub1 network 404 may be significantly degraded for a significant period of time.

One approach that may be applied to minimize throughput degradation is for the UE to feedback HARQ-ACK in response to the un-decoded data transmissions (e.g., PDSCH transmissions 418). Such HARQ-ACK may be referred to as a "fake" HARQ-ACK, since the UE does not actually decode the PDSCH transmission but nevertheless acknowledges the PDSCH transmission to the base station. For instance, while the UE is suspending SRS antenna switching in the Sub1 network 404 to perform an activity in the Sub2 network 408 (e.g., monitoring for page 410), the UE may transmit fake HARQ-ACK in in the Sub1 network in response to each PDSCH transmission 418 received from the base station in the Sub1 network. For example, a UE with common radio or baseband components for multiple subscriptions may switch its antennas back and forth between the subscriptions to send fake HARQ-ACK in response to un-decoded data transmissions in the Sub1 network while performing the other activity in the Sub2 network, either in different bands in frequency division multiplexing (FDM) or in different slots, subframes, or frames in time division multiplexing (TDM). Alternatively, a UE with multiple radio or baseband components may send fake HARQ-ACK in response to un-decoded data transmissions in the Sub1 network simultaneously while performing the other activity in the Sub2 network. Since the base station in the Sub1 network accordingly receives HARQ-ACKs rather than HARQ-NACKs in response to the PDSCH transmissions, the base station may interpret (although erroneously) these PDSCH transmissions as being successfully decoded by the UE and consequently not reduce MCS in subsequent grants. As a result, data throughput in the Sub1 network may be improved.

However, such transmission of fake HARQ-ACKs (e.g., in response to every PDSCH transmission) may lead to large radio link control (RLC) holes. An RLC hole refers to a gap between a last RLC protocol data unit (PDU) actually decoded by the UE and an RLC PDU that is next up for transmission by the base station. Multiple such RLC holes (gaps between acknowledged and next to transmit RLC PDUs) may exist as a result of fake HARQ-ACKs. For example, in acknowledged mode (AM) RLC, a base station generally stores RLC PDUs with different sequence numbers in a re-transmission buffer, re-transmits non-acknowledged PDUs in that buffer to the UE, and removes acknowledged PDUs from the re-transmission buffer. As a result, if the UE transmits fake HARQ-ACK in response to RLC PDUs (e.g., PDSCH data transmissions 418), the base station may erroneously consider these data transmissions as properly acknowledged by the UE, even though the UE has not decoded these transmissions as described above. In such case, the base station may remove these "fake" acknowledged RLC PDUs from the re-transmission buffer, transmit subsequent RLC PDUs (with other sequence numbers), and forgo re-transmitting the prior RLC PDUs. Consequently, a significant hole or gap may result between the last acknowledged RLC PDU that was actually decoded by the UE, and the next RLC PDU which the base station plans to transmit. Similarly, multiple holes or gaps may result between acknowledged RLC PDUs and next RLC PDUs up for transmission.

To address the RLC hole(s), RLC status reports may be implemented in AM RLC. Generally, in AM RLC, a base station may store in a re-transmission buffer a copy of an RLC PDU transmitted to the UE, and the UE may store in a reception buffer a copy of the RLC PDU received from the base station. In response to receiving the RLC PDU, the UE may trigger a reassembly timer (e.g., a parameter *tReassembly* or some other name), during which time the UE may receive and store in the reception buffer received RLC PDUs and reassemble any RLC PDUs which include out-of-order sequence numbers. The base station may similarly transmit and store in the re-transmission buffer the transmitted RLC PDUs during this time. If the reassembly timer expires, the UE may send an RLC status report (e.g., a STATUS PDU) acknowledging received and successfully decoded RLC PDUs and indicating non-acknowledged (un-successfully decoded) RLC PDUs (e.g., by sequence number(s)). The UE may also trigger a status prohibit timer (e.g., a parameter *tStatusProhibit* or some other name) in response to sending the RLC status report, during which time the UE may be prohibited from sending further STATUS PDUs until the status prohibit timer expires. In response to the RLC status report, the base station may re-transmit the non-acknowledged PDUs to the UE, and the base station may remove the acknowledged PDUs from the re-transmission buffer. If the retransmissions are subsequently decoded and acknowledged by the UE, the size of the RLC hole(s) may be reduced. Alternatively, if previously non-acknowledged PDUs (prior to the RLC status report) or new non-acknowledged PDUs (in response to the retransmissions) still exist, the UE may send an additional RLC status report and the base station may again re-transmit non-acknowledged PDUs to the UE. This process may repeat over time until the RLC hole(s) are eliminated.

Thus, RLC status reports may serve to reduce RLC holes caused by fake HARQ-ACKs over time during SRS antenna switching suspension for MSIM UEs. The total time that may elapse before these RLC hole(s) are eliminated may be referred to as an RLC layer delay time. However, due to the long, fixed periodicity between RLC status reports (e.g., as controlled by the reassembly timer and status prohibit timer) and the large size of the RLC hole(s) (e.g., as a result of fake HARQ-ACK feedback in response to every un-decoded data transmission), the RLC layer delay time may be significant. Moreover, throughput may be degraded within the RLC layer delay time as well, for example, if the base station reduces MCS in response to subsequent HARQ-NACKs following resumed SRS antenna switching as described above.

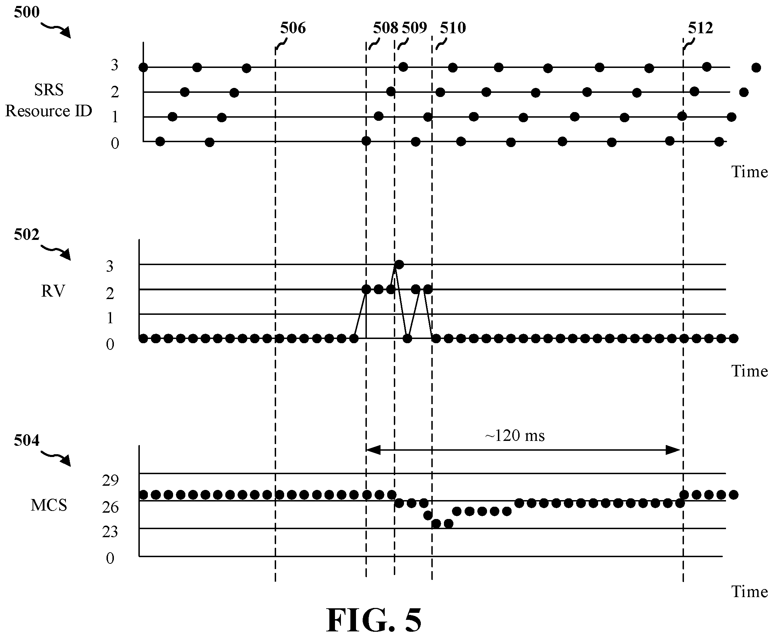

Figure 5 illustrates an example of different plots 500, 502, 504 illustrating how the suspension and resumption of SRS antenna switching in MSIM UEs may affect data re-transmissions with different redundancy versions (RVs) and MCS. At time 506, the UE may suspend SRS antenna switching, during which time the UE may send fake HARQ-ACKs to the base station in response to un-decoded data transmissions. Once SRS transmission resumes at time 508, the UE may send HARQ-NACKs to the base station in response to further un-decoded data transmissions. For example, the UE may fail to decode the data transmissions after SRS antenna switching resumes in response to failed CRC checks, which may result from incorrect or outdated precoding applied to the data transmissions as described above. Moreover, in response to the HARQ-NACKs, at time 509, the base station may begin to drop MCS for subsequent data transmissions. Afterwards, the UE may be triggered to send an RLC status report indicating acknowledged and non-acknowledged data transmissions (e.g., in response to RLC PDUs including the data transmissions). In response to the RLC status report, the base station may determine the existence of RLC hole(s) resulting from the fake HARQ-ACKs, and the base station may re-transmit at least a portion of the non-acknowledged data with different RV(s). The UE may continue to provide RLC status reports indicating non-acknowledged data and receiving data re-transmissions until the RLC hole(s) have been eliminated. For example, by time 510, the base station may cease sending data re-transmissions (with different RVs) when the sequence number of the next RLC PDU immediately follows the sequence number of the last acknowledged RLC PDU. Eventually, by time 512, the base station may also recover the MCS to its original value. However, such MCS recovery may take a long period of time (e.g., ~120 ms). Moreover, the base station may resolve the RLC holes resulting from the fake HARQ-ACKs and address buffered data accordingly in higher layers (e.g., in the PDCP) similarly after a long period of time (e.g., 36 ms and 38 ms, respectively).

Thus, notwithstanding the changes to downlink precoding caused by SRS antenna switching suspension, a MSIM UE may transmit a fake HARQ-ACK report during such suspension in order to relieve the network scheduling penalty on MCS resulting from such suspension. For example, the UE may transmit fake HARQ-ACK in response to each of the un-decoded data transmissions after suspending SRS antenna switching, thus resulting in the UE reporting less HARQ-NACK during the suspension and resulting in the base station terminating HARQ re-transmissions in response to such HARQ-NACKs. However, as transmission of fake HARQ-ACK in response to every un-decoded data transmission may lead to large RLC hole(s) as described above, aspects of the present disclosure allow the UE to control the amount of fake HARQ-ACKs to be transmitted. For example, during SRS antenna switching suspension, the UE may feedback fake HARQ-ACK according to a controlled pattern. In one aspect, the controlled pattern may involve the UE providing ACK feedback on a controlled percentage of downlink HARQ transmissions. For example, for every eight un-decoded data transmissions (e.g., with each data transmission being associated with a different HARQ process), the UE may provide fake HARQ-ACK feedback for 7 out of the 8 data transmissions or HARQ processes (e.g., a percentage of 88%, or some other number or percentage of data transmissions or HARQ processes), rather than in response to every data transmission or HARQ process. In another aspect, the controlled pattern may involve the UE providing ACK and NACK feedback according to a controlled ratio. For example, for every ten un-decoded data transmissions, the UE may provide fake HARQ-ACK feedback for 9 out of the 10 data transmissions and HARQ-NACK feedback for the remaining 1 out of the 10 data transmissions (e.g., a ratio of 9/10, or some other ratio of data transmissions), rather than providing HARQ-ACK in response to every data transmission or HARQ process.

In addition to the fake HARQ-ACK report, aspects of the present disclosure allow the UE to also transmit a controlled, RLC NACK report (e.g., an RLC status report indicating non-acknowledged RLC PDUs) in order to relieve the aforementioned RLC layer delay time (e.g., 36 ms in the example plots of FIG. 5) and redundancy (e.g., various RVs in the example plots of FIG. 5). For example, after transmitting an RLC status report indicating a non-acknowledged RLC PDU, the UE may adaptively accelerate or slow down a next RLC status report based on how quickly the UE receives a subsequent, retransmitted RLC PDU and based on the percentage that the retransmission reduces the RLC hole(s). In one aspect, the UE may generate and transmit non-acknowledgments in an RLC status report to a base station in a more aggressive manner by setting a smaller reassembly timer (e.g., *tReassembly*) or a smaller status prohibit timer (*tStatusProhibit*) than those set for a prior RLC status report. For example, the UE may trigger a faster STATUS PDU periodicity in response to configuring a smaller value for the reassembly timer or status prohibit timer. In another aspect, in response to sending a RLC status report indicating non-acknowledged RLC PDUs, the base station may re-transmit the non-acknowledged RLC PDUs, and the UE may control a subsequent RLC status report based on a comparison of a number of received RLC PDU retransmissions with the number of non-acknowledged RLC PDUs in the prior RLC status report. For example, if the ratio or percentage of RLC PDU retransmissions compared to previously non-acknowledged RLC PDUs is low, the UE may determine that the RLC hole has been reduced by a small amount in response to the retransmissions, and therefore the UE may transmit a STATUS PDU more quickly (with reduced periodicity) to trigger the base station to send faster retransmissions and reduce the RLC hole more quickly. On the other hand, if the ratio or percentage of RLC PDU retransmissions compared to previously non-acknowledged RLC PDUs is high, the UE may determine that the RLC hole has been reduced by a large amount in response to the retransmissions, and therefore the UE may transmit a STATUS PDU more slowly (with increased periodicity) to save resources. Thus, rather than transmitting RLC status reports with a fixed periodicity as previously described, the UE may transmit RLC status reports with different periodicities (e.g., shorter or longer time between RLC status reports) based on re-transmission timing or numbers.

In an additional aspect, the UE may feedback fake HARQ-ACK in response to un-decoded data transmissions, according to any of the aforementioned controlled patterns, not only while SRS antenna switching is suspended, but also for a configured period of time after SRS antenna switching resumes. Moreover, in an additional aspect, the UE may transmit RLC status reports, controlled with different transmission periodicities according to any of the aforementioned factors described above, for a configured period of time after SRS antenna switching resumes. The configured period of time may represent a length of time after which any RLC hole(s) are completely filled in response to the fake HARQ-ACKs or RLC status reports with different transmission periodicities. Thus, the configured period of time following the resumption of SRS antenna switching may be the same for transmitting the fake HARQ-ACK and the RLC status reports. Alternatively, different periods of time may be configured for transmitting fake HARQ-ACK and RLC status reports, respectively. Moreover, the UE may revert to HARQ-NACK feedback or default RLC status reports after this configured period of time for resource efficiency.

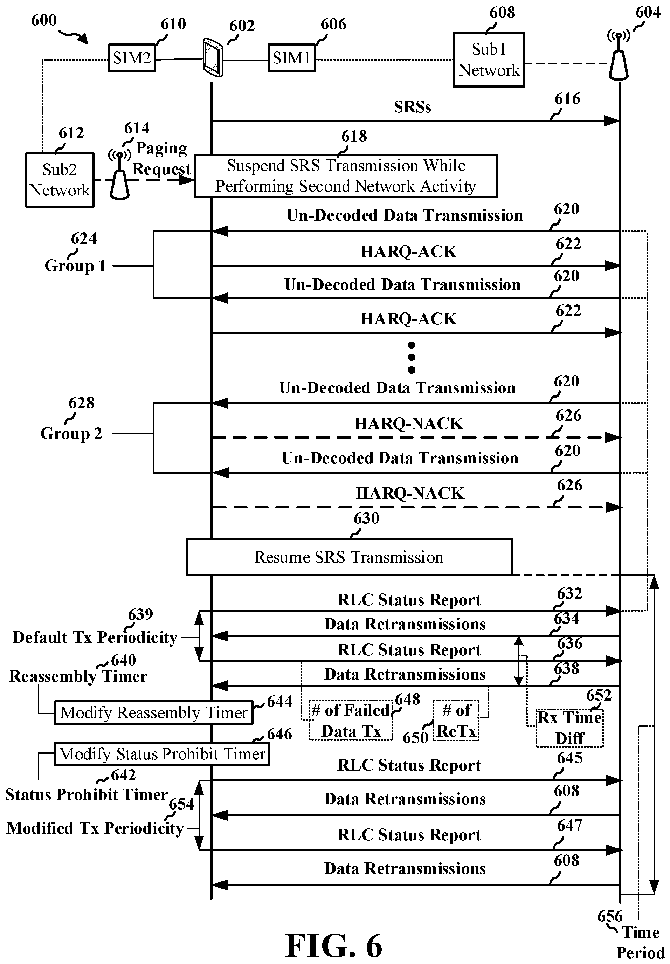

FIG. 6 is a diagram 600 illustrating an example of a call flow between a UE 602 and a base station 604. The UE may be a MSIM UE including a first SIM 606 associated with a first subscription in a first network 608 (e.g., Sub1 network 404), and a second SIM 610 associated with a second subscription in a second network 612 (e.g., Sub2 network 408). The UE may communicate with base station 604 in the first network 608. The UE may also communicate with another base station 614 in the second network 612.

The UE 602 may initially transmit SRSs 616 (e.g., SRS resources 402) to base station 604 in the first network 608 over different antennas of the UE (e.g., according to any of the aforementioned modes of SRS antenna switching). Subsequently, at block 618, the UE may suspend transmission of SRSs 616 over the different antennas to perform an activity in the second network 612. For instance, the UE may refrain from transmitting SRS over any of its antennas (e.g., at time 412). Moreover, the activity may be where the UE monitors for a paging request (e.g., page 410) from the other base station 614 in the second network, or performs some other activity. While SRS antenna switching is suspended, the UE may receive un-decoded data transmissions 620 from base station 604, and the UE may provide controlled, fake HARQ-ACK for a percentage of the un-decoded data transmissions or provide fake HARQ-ACK and HARQ-NACK according to a controlled ratio. For example, the UE may provide fake HARQ-ACK 622 in response to un-decoded data transmissions 620 in a first group 624 of transmissions. In another example, the UE may optionally provide HARQ-NACK 626 in response to un-decoded data transmissions 620 within a second group 628 of transmissions. Thus, the UE may not send fake HARQ-ACK in response to every un-decoded data transmission.

At block 630, the UE 602 may resume SRS antenna switching. For instance, the UE may restart transmitting SRS over its different antennas (e.g., at time 422). Afterwards, the UE may transmit an RLC status report 632 indicating the un-decoded data transmissions 620 as non-acknowledged. In response to the RLC status report, the UE may receive data retransmissions 634 from the base station 604, which similarly may be un-decodable at the UE (e.g., due to incorrect precoding applied to the data retransmissions). Thus, the UE may again transmit an RLC status report 636 indicating the non-acknowledged data re-transmissions, in response to which the UE may again receive data retransmissions 638 from the base station. Here, the RLC status reports 632, 636 may have a default transmission periodicity 639, which may be based on a default value of a reassembly timer 640 or a status prohibit timer 642. For instance, the reassembly timer or status prohibit timer may be set to a length of time, and the RLC status reports may be sent in response to expiration of the reassembly timer or status prohibit timer as described above.

At block 644, the UE may modify the reassembly timer 640 for subsequent RLC status reports 645, 647. Alternatively, or additionally, at block 646, the UE may modify the status prohibit timer 642 for subsequent RLC status reports 645, 647. The UE may modify the reassembly timer or status prohibit timer based on a number of un-decoded data transmissions 648 (e.g., data retransmissions 634 or 638 indicated in the RLC status report 636 as non-acknowledged) and based on a number of data retransmissions 650 received from the base station in response to the RLC status report (e.g., data retransmissions 638). For example, the UE may reduce the value of either or both the reassembly timer or status prohibit timer to less than the aforementioned default value, thereby decreasing the periodicity of subsequent RLC status reports, if the percentage or ratio of the number of data retransmissions 650 to the number of un-decoded data transmissions 648 is high. That is, the UE may send subsequent RLC status reports 645, 647 at a faster rate than RLC status reports 632, 636 if the UE receives, decodes, and acknowledges few data retransmissions of the non-acknowledged transmissions (e.g., if the RLC hole(s) are reduced by a small amount). Similarly, the UE may increase the value of either or both the reassembly timer or status prohibit timer to more than the aforementioned default value, thereby increasing the periodicity of subsequent RLC status reports 645, 647, if the percentage or ratio of the number of data retransmissions 650 to the number of un-decoded data transmissions 648 is low. That is, the UE may send subsequent RLC status reports 645, 647 at a slower rate than RLC status reports 632, 636 if the UE receives, decodes, and acknowledges many data retransmissions of the non-acknowledged transmissions (e.g., if the RLC hole(s) are reduced by a large amount).

Additionally, the UE 602 may modify the reassembly timer 640 at block 644 or status prohibit timer 642 at block 646 based on a reception time difference 652 between one of the un-decoded data transmissions 620 (or an un-decoded one of the data retransmissions 634) and one of the data retransmissions 638. For example, the UE may reduce the value of either or both the reassembly timer or status prohibit timer to less than the aforementioned default value, thereby decreasing the periodicity of subsequent RLC status reports 645, 647, if the reception time difference 652 is long. That is, the UE may send subsequent RLC status reports 645, 647 at a faster rate than RLC status reports 632, 636 if the UE receives data retransmissions of the non-acknowledged transmissions after a long time (e.g., if the RLC hole(s) are reduced slowly). Similarly, the UE may increase the value of either or both the reassembly timer or status prohibit timer to more than the aforementioned default value, thereby increasing the periodicity of subsequent RLC status reports 645, 647, if the reception time difference 652 is short. That is, the UE may send subsequent RLC status reports 645, 647 at a slower rate than RLC status reports 632, 636, if the UE receives data retransmissions of the non-acknowledged transmissions after a short time (e.g., if the RLC hole(s) are reduced quickly). Thus, the RLC status reports 645, 647 may have a modified transmission periodicity 654 which may be larger or smaller than the default transmission periodicity 639 based on the modification of the reassembly timer 640 or status prohibit timer 642.

Furthermore, as illustrated in the example of FIG. 6, the UE 602 may send the controlled RLC status reports (e.g., subsequent RLC status reports 645, 647 with modified transmission periodicity 654 compared to default transmission periodicity 639) within a time period 656 after resuming SRS antenna switching at block 630. Moreover, the UE may send fake HARQ-ACKs 622 during this time period. Time period 656 may represent a time after which the aforementioned RLC holes may be completely filled in response to the fake HARQ-ACKs or controlled RLC status reports. Therefore, after time period 656 expires, the UE may revert to sending RLC status reports 632, 636 with default transmission periodicities 639, or revert to sending HARQ-NACKs 626 in response to un-decoded data transmissions, for resource efficiency due to lack of RLC holes.

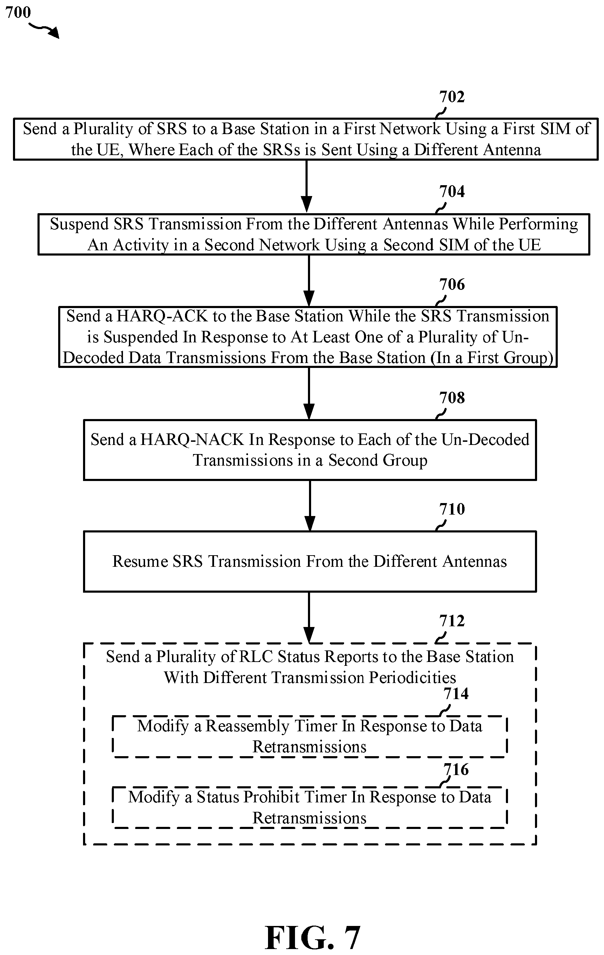

FIG. 7 is a flowchart 700 of a method of wireless communication. The method may be performed by a UE (e.g., the UE 104, 350, 602; the apparatus 702). Optional aspects are illustrated in dashed lines. The method allows a MSIM UE to transmit a controlled pattern of fake HARQ-ACK in response to un-decoded data transmissions from a base station, while suspending SRS antenna switching during performance of an activity in a different network subscription, in order to relieve a network scheduling penalty on MCS in response to such suspension while minimizing RLC holes. The method also allows the MSIM UE to transmit a controlled RLC status report to the base station indicating non-acknowledged data transmissions or retransmissions with modified transmission periodicity in order to relieve an RLC layer delay time and redundancy version cycling resulting from the fake HARQ-ACKs.

At 702, the UE sends a plurality of SRSs to a base station in a first network using a first SIM of the UE, where each of the SRSs is sent using a different antenna. For example, 702 may be performed by SRS component 840. For instance, referring to FIG. 6, the UE 602 may transmit SRSs 616 to base station 604 in first network 608 associated with first SIM 606 of UE 602. Moreover, referring to FIGs. 3 and 4, the UE 350 may transmit each SRS (e.g., SRS resources 402) over a different antenna 352 (e.g., in any of the aforementioned modes 1T2R, 1T4R, 2T4R, or T=R) to the base station in Sub 1 404.

At 704, the UE suspends SRS transmission from the different antennas while performing an activity in a second network using a second SIM of the UE. For example, 704 may be performed by SRS suspension component 842. For instance, referring to FIG. 6, at block 618, the UE 602 may suspend transmitting the SRSs 616 to base station 604 while monitoring for a paging request or performing another activity in the second network 612 associated with second SIM 610 of UE 602. For example, referring to FIGs. 3 and 4, at 412, the UE 350 may refrain from transmitting any SRS (e.g., SRS resource 402) over antennas 352 in Sub1 404 while monitoring for page 410 in Sub2 408.

At 706, the UE sends a HARQ-ACK to the base station while the SRS transmission is suspended in response to at least one of a plurality of un-decoded data transmissions from the base station. For example, 706 may be performed by HARQ-ACK component 844. For instance, referring to FIG. 6, the UE 602 may transmit fake HARQ-ACKs 622 to base station 604 while suspending transmission of SRSs 616 in response to receiving un-decoded data transmissions 620 from the base station. For example, referring to FIGs. 3 and 4, the UE 350 may transmit a HARQ-ACK in response to each PDSCH transmission 418 that the UE fails to decode (e.g., due to a CRC error) following the suspension of SRS antenna switching at 412.

In one example, the un-decoded data transmissions may comprise a first group of un-decoded data transmissions selected for acknowledgement and a second group of un-decoded data transmissions not selected for acknowledgment, where the HARQ-ACK is sent in response to each of the un-decoded data transmissions in the first group. In another example, at 708, the UE may send a HARQ-NACK in response to each of the un-decoded transmissions in the second group. For example, 708 may be performed by HARQ-NACK component 846. For instance, referring to FIGs. 3, 4, and 6, the un-decoded data transmissions 620 (e.g., PDSCH transmissions 418) may be divided between first group 624 and second group 628, where the UE 350, 602 may select to transmit fake HARQ-ACKs 622 in response to each of the un-decoded data transmissions 620 in the first group 624. In one example, the UE 350, 602 may select to refrain from transmitting fake HARQ-ACKs 622 in response to un-decoded data transmissions 620 in the second group 628. In another example, the UE 350, 602 may transmit HARQ-NACK 626 in response to each of the un-decoded data transmissions 620 in the second group 628.

At 710, the UE may resume the SRS transmission from the different antennas. For example, 710 may be performed by SRS resumption component 848. For instance, referring to FIG. 6, at block 630, the UE 602 may resume transmitting the SRSs 616 to base station 604. For example, referring to FIGs. 3 and 4, at 422, the UE 350 may restart transmitting SRSs (e.g., SRS resources 402) over antennas 352 in Sub 1 404.

At 712, the UE may send a plurality of RLC status reports to the base station with different transmission periodicities. For example, 712 may be performed by RLC status report component 850. The RLC status reports may comprise a first RLC status report indicating the un-decoded data transmissions and a second RLC status report sent in response to data retransmissions from the base station. For instance, referring to FIGs. 3, 4, and 6, the UE 350, 602 may transmit RLC status report 632 or 636 indicating un-decoded data transmissions 620 (e.g., PDSCH transmissions 418) as non-acknowledged. The RLC status reports 632, 636 may be transmitted according to default transmission periodicity 639. Moreover, in response to data retransmissions 634 or 638, the UE 350, 602 may transmit RLC status report 645 or 647 with modified transmission periodicity 654. Thus, RLC status reports 632, 636 and RLC status reports 645, 647 may have different transmission periodicities.

In one example, the different transmission periodicities may be based on a reception time difference between one of the un-decoded data transmissions and one of the data retransmissions. For instance, referring to FIG. 6, the UE 602 may determine the difference between default transmission periodicity 639 and modified transmission periodicity 654 in response to the reception time difference 652 between one of the un-decoded data transmissions 620 (or one of the data retransmissions 634) and one of the data retransmissions 638 (or 634). For example, the UE may send subsequent RLC status reports 645, 647 at a faster rate than RLC status reports 632, 636 if the UE receives data retransmissions of non-acknowledged transmissions after a long time (e.g., if reception time difference 652 is long and thus the RLC hole(s) are reduced slowly). Alternatively, the UE may send subsequent RLC status reports 645, 647 at a slower rate than RLC status reports 632, 636, if the UE receives data retransmissions of non-acknowledged transmissions after a short time (e.g., if reception time difference 652 is short and thus the RLC hole(s) are reduced quickly).

In one example, the different transmission periodicities may be based on a number of the un-decoded data transmissions and a number of the data retransmissions. For instance, referring to FIG. 6, the UE 602 may determine the difference between default transmission periodicity 639 and modified transmission periodicity 654 in response to the number of un-decoded data transmissions 648 (e.g., data retransmissions 634 or 638 indicated in the RLC status report 636 as non-acknowledged) and the number of data retransmissions 650 received from the base station 604 in response to the RLC status report 636 (e.g., data retransmissions 638). For example, the UE 602 may send subsequent RLC status reports 645, 647 at a faster rate than RLC status reports 632, 636 if the UE receives, decodes, and acknowledges few data retransmissions of the non-acknowledged transmissions (e.g., if the RLC hole(s) are reduced by a small amount). Alternatively, the UE 602 may send subsequent RLC status reports 645, 647 at a slower rate than RLC status reports 632, 636 if the UE receives, decodes, and acknowledges many data retransmissions of the non-acknowledged transmissions (e.g., if the RLC hole(s) are reduced by a large amount).

In one example, at 714, the UE may modify a reassembly timer in response to the data retransmissions, where the different transmission periodicities are based on the modified reassembly timer. For example, 714 may be performed by reassembly timer component 852. For instance, referring to FIG. 6, at 644, the UE 602 may modify the reassembly timer 640 for subsequent RLC status reports 645, 657 in response to data retransmissions 634 or 638. The UE may modify the reassembly timer at 644, for example, in response to the reception time difference 652, or in response to the number of un-decoded data transmissions 648 and number of data retransmissions 650, described above. Since RLC status reports may be sent in response to expiration of the reassembly timer as described above, the modification of reassembly timer 640 may result in a different transmission periodicity (e.g., modified transmission periodicity 654) for subsequent RLC status reports 645, 647 compared to the default transmission periodicity 639 of RLC status reports 632, 636 (which in turn may be based on a default value of reassembly timer 640).

In another example, at 716, the UE may modify a status prohibit timer in response to the data retransmissions, where the different transmission periodicities are based on the modified status prohibit timer. For example, 716 may be performed by status prohibit timer component 854. For instance, referring to FIG. 6, at 646, the UE 602 may modify the status prohibit timer 642 for subsequent RLC status reports 645, 657 in response to data retransmissions 634 or 638. The UE may modify the status prohibit timer at 646, for example, in response to the reception time difference 652, or in response to the number of un-decoded data transmissions 648 and number of data retransmissions 650, described above. Since RLC status reports may be sent in response to expiration of the status prohibit timer as described above, the modification of status prohibit timer 642 may result in a different transmission periodicity (e.g., modified transmission periodicity 654) for subsequent RLC status reports 645, 647 compared to the default transmission periodicity 639 of RLC status reports 632, 636 (which in turn may be based on a default value of status prohibit timer 642).

In one example, the HARQ-ACK may be sent in response to un-decoded data transmissions selected for acknowledgment and the RLC status reports may be sent with the different transmission periodicities for a period of time after resuming the SRS transmission at 710. For instance, referring to FIG. 6, the UE 602 may transmit subsequent RLC status reports 645, 647 with modified transmission periodicity 654 compared to default transmission periodicity 639 within time period 656 after resuming SRS antenna switching at block 630. Moreover, the UE may send fake HARQ-ACKs 622 in response to un-decoded data transmissions 620 during the time period 656.

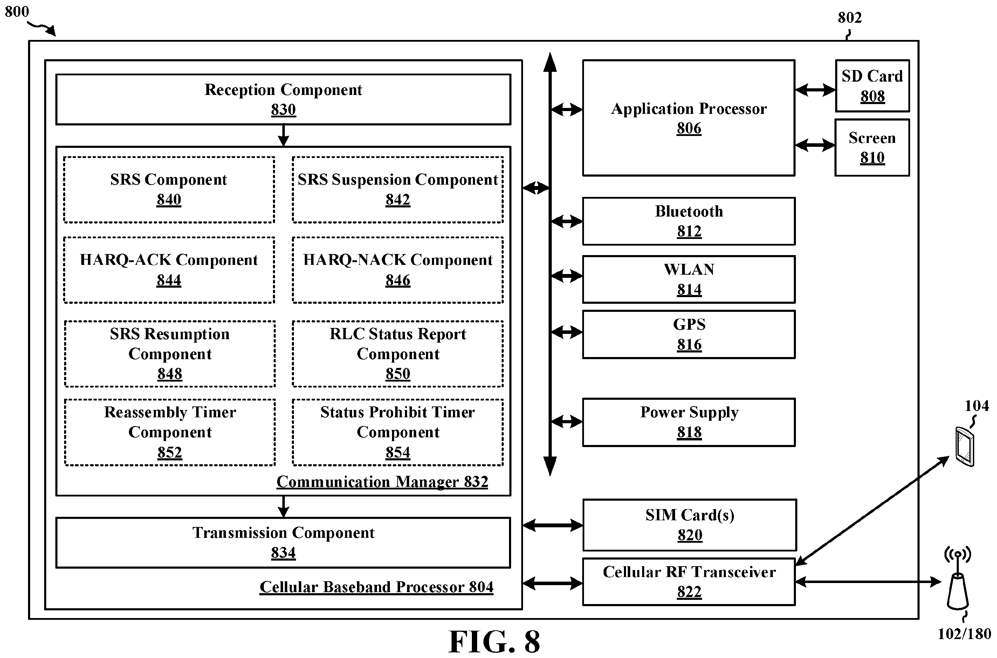

FIG. 8 is a diagram 800 illustrating an example of a hardware implementation for an apparatus 802. The apparatus 802 is a UE and includes a cellular baseband processor 804 (also referred to as a modem) coupled to a cellular RF transceiver 822 and one or more subscriber identity modules (SIM) cards 820, an application processor 806 coupled to a secure digital (SD) card 808 and a screen 810, a Bluetooth module 812, a wireless local area network (WLAN) module 814, a Global Positioning System (GPS) module 816, and a power supply 818. The cellular baseband processor 804 communicates through the cellular RF transceiver 822 with the UE 104 and/or BS 102/180. The cellular baseband processor 804 may include a computer-readable medium / memory. The computer-readable medium / memory may be non-transitory. The cellular baseband processor 804 is responsible for general processing, including the execution of software stored on the computer-readable medium / memory. The software, when executed by the cellular baseband processor 804, causes the cellular baseband processor 804 to perform the various functions described *supra.* The computer-readable medium / memory may also be used for storing data that is manipulated by the cellular baseband processor 804 when executing software. The cellular baseband processor 804 further includes a reception component 830, a communication manager 832, and a transmission component 834. The communication manager 832 includes the one or more illustrated components. The components within the communication manager 832 may be stored in the computer-readable medium / memory and/or configured as hardware within the cellular baseband processor 804. The cellular baseband processor 804 may be a component of the UE 350 and may include the memory 360 and/or at least one of the TX processor 368, the RX processor 356, and the controller/processor 359. In one configuration, the apparatus 802 may be a modem chip and include just the baseband processor 804, and in another configuration, the apparatus 802 may be the entire UE (e.g., see 350 of FIG. 3) and include the aforediscussed additional modules of the apparatus 802.

The communication manager 832 includes a SRS component 840 that is configured to send a plurality of sounding reference signals (SRSs) to a base station in a first network using a first subscriber identity module (SIM) of the UE, wherein each of the SRSs is sent using a different antenna, e.g., as described in connection with 702. The communication manager 832 includes a SRS suspension component 842 that is configured to suspend SRS transmission from the different antennas while performing an activity in a second network using a second SIM of the UE, e.g., as described in connection with 704. The communication manager 832 includes a HARQ-ACK component 844 that is configured to send a hybrid-automatic repeat request (HARQ) acknowledgment (HARQ-ACK) to the base station while the SRS transmission is suspended in response to at least one of a plurality of un-decoded data transmissions from the base station, e.g., as described in connection with 706. The communication manager 832 includes a HARQ-NACK component 846 that is configured to send a HARQ non-acknowledgement (HARQ-NACK) in response to each of the un-decoded transmissions in the second group, e.g., as described in connection with 708. The communication manager 832 includes a SRS resumption component 848 that is configured to resume the SRS transmission from the different antennas, e.g., as described in connection with 710. The communication manager 832 includes a RLC status report component 850 that is configured to send a plurality of radio link control (RLC) status reports to the base station with different transmission periodicities, e.g., as described in connection with 712. The communication manager 832 includes a reassembly timer component 852 that is configured to modify a reassembly timer in response to the data retransmissions, e.g., as described in connection with 714. The communication manager 832 includes a status prohibit timer component 854 that is configured to modify a status prohibit timer in response to the data retransmissions, e.g., as described in connection with 716.

The apparatus may include additional components that perform each of the blocks of the algorithm in the aforementioned flowcharts of FIGs. 6 and 7. As such, each block in the aforementioned flowcharts of FIGs. 6 and 7 may be performed by a component and the apparatus may include one or more of those components. The components may be one or more hardware components specifically configured to carry out the stated processes/algorithm, implemented by a processor configured to perform the stated processes/algorithm, stored within a computer-readable medium for implementation by a processor, or some combination thereof.

In one configuration, the apparatus 802, and in particular the cellular baseband processor 804, includes means for sending a plurality of sounding reference signals (SRSs) to a base station in a first network using a first subscriber identity module (SIM) of the UE, wherein each of the SRSs is sent using a different antenna; means for suspending SRS transmission from the different antennas while performing an activity in a second network using a second SIM of the UE; and means for sending a hybrid-automatic repeat request (HARQ) acknowledgment (HARQ-ACK) to the base station while the SRS transmission is suspended in response to at least one of a plurality of un-decoded data transmissions from the base station.

In one configuration, the apparatus 802, and in particular the cellular baseband processor 804, may include means for sending a HARQ non-acknowledgement (HARQ-NACK) in response to each of the un-decoded transmissions in the second group.

In one configuration, the apparatus 802, and in particular the cellular baseband processor 804, may include means for sending a plurality of radio link control (RLC) status reports to the base station with different transmission periodicities.

In one configuration, the apparatus 802, and in particular the cellular baseband processor 804, may include means for modifying a reassembly timer in response to the data retransmissions, wherein the different transmission periodicities are based on the modified reassembly timer.

In one configuration, the apparatus 802, and in particular the cellular baseband processor 804, may include means for modifying a status prohibit timer in response to the data retransmissions, wherein the different transmission periodicities are based on the modified status prohibit timer.

In one configuration, the apparatus 802, and in particular the cellular baseband processor 804, may include means for resuming the SRS transmission from the different antennas.

The aforementioned means may be one or more of the aforementioned components of the apparatus 802 configured to perform the functions recited by the aforementioned means. As described *supra*, the apparatus 802 may include the TX Processor 368, the RX Processor 356, and the controller/processor 359. As such, in one configuration, the aforementioned means may be the TX Processor 368, the RX Processor 356, and the controller/processor 359 configured to perform the functions recited by the aforementioned means.

Accordingly, aspects of the present disclosure allow a MSIM UE to transmit a controlled pattern of fake HARQ-ACK in response to un-decoded data transmissions from a base station, while suspending SRS antenna switching during performance of an activity in a different network subscription, in order to relieve a network scheduling penalty on MCS in response to such suspension while minimizing RLC holes. Aspects of the present disclosure also allow the MSIM UE to transmit a controlled RLC status report to the base station indicating non-acknowledged data transmissions or retransmissions with modified transmission periodicity in order to relieve an RLC layer delay time and redundancy version cycling resulting from the fake HARQ-ACKs.

It is understood that the specific order or hierarchy of blocks in the processes / flowcharts disclosed is an illustration of example approaches.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language claims, wherein reference to an element in the singular is not intended to mean "one and only one" unless specifically so stated, but rather "one or more." Terms such as "if," "when," and "while" should be interpreted to mean "under the condition that" rather than imply an immediate temporal relationship or reaction. That is, these phrases, e.g., "when," do not imply an immediate action in response to or during the occurrence of an action, but simply imply that if a condition is met then an action will occur, but without requiring a specific or immediate time constraint for the action to occur. The word "exemplary" is used herein to mean "serving as an example, instance, or illustration." Any aspect described herein as "exemplary" is not necessarily to be construed as preferred or advantageous over other aspects. Unless specifically stated otherwise, the term "some" refers to one or more. Combinations such as "at least one of A, B, or C," "one or more of A, B, or C," "at least one of A, B, and C," "one or more of A, B, and C," and "A, B, C, or any combination thereof" include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof" may be A only, B only, C only, A and B, A and C, B and C, or A and B and C, where any such combinations may contain one or more member or members of A, B, or C.

Moreover, nothing disclosed herein is intended to be dedicated to the public regardless of whether such disclosure is explicitly recited in the claims. The words "module," "mechanism," "element," "device," and the like may not be a substitute for the word "means." As such, no claim element is to be construed as a means plus function unless the element is expressly recited using the phrase "means for." The scope of protection of the invention is defined in the appended set of claims.

## Claims

1. A method (700) of wireless communication by a user equipment, UE, configured to operate in a 3GPP system, comprising:
sending (702) a plurality of sounding reference signals, SRSs, to a base station in a first network using a first subscriber identity module, SIM, of the UE, wherein each of the SRSs is sent using a different antenna;
suspending (704) SRS transmission from the different antennas while performing an activity in a second network using a second SIM of the UE; and
**characterised in that** the method further comprises sending (706) a fake hybrid-automatic repeat request, HARQ, acknowledgment, HARQ-ACK, to the base station in response to at least one of a plurality of un-decoded data transmissions received from the base station while the SRS transmission is suspended.

2. The method of claim 1, wherein the un-decoded data transmissions comprise a first group of un-decoded data transmissions selected for acknowledgment and a second group of un-decoded data transmissions not selected for acknowledgment, wherein the fake HARQ-ACK is sent in response to each of the un-decoded data transmissions in the first group.

3. The method of claim 2, further comprising:
sending (708) a HARQ non-acknowledgement, HARQ-NACK, in response to each of the un-decoded data transmissions in the second group.

4. The method of claim 1, further comprising:
sending (712) a plurality of radio link control, RLC, status reports to the base station with different transmission periodicities;
wherein the RLC status reports comprise a first RLC status report indicating the un-decoded data transmissions and a second RLC status report sent in response to data retransmissions from the base station, wherein the data retransmissions are received from the base station in response to the first RLC status report.

5. The method of claim 4, wherein the different transmission periodicities are based on a reception time difference between one of the un-decoded data transmissions and one of the data retransmissions.

6. The method of claim 4, wherein the different transmission periodicities are based on a number of the un-decoded data transmissions and a number of the data retransmissions.

7. The method of claim 4, further comprising:
modifying (714) a reassembly timer in response to the data retransmissions, wherein the different transmission periodicities are based on the modified reassembly timer; or
modifying (716) a status prohibit timer in response to the data retransmissions, wherein the different transmission periodicities are based on the modified status prohibit timer.

8. The method of claim 4, further comprising:
resuming (710) the SRS transmission from the different antennas,
wherein the fake HARQ-ACK is sent in response to un-decoded data transmissions selected for acknowledgment and the RLC status reports are sent with the different transmission periodicities for a period of time after resuming the SRS transmission.

9. An apparatus (802) for wireless communication, configured to operate in a 3GPP system, comprising:
means (840) for sending a plurality of sounding reference signals, SRSs, to a base station in a first network using a first subscriber identity module, SIM, of the apparatus, wherein each of the SRSs is sent using a different antenna;
means (842) for suspending SRS transmission from the different antennas while performing an activity in a second network using a second SIM of the apparatus; and
**characterised in that** the apparatus further comprises means (844) for sending a fake hybrid-automatic repeat request, HARQ, acknowledgment, HARQ-ACK, to the base station in response to at least one of a plurality of un-decoded data transmissions received from the base station while the SRS transmission is suspended.

10. The apparatus of claim 9, wherein the un-decoded data transmissions comprise a first group of un-decoded data transmissions selected for acknowledgment and a second group of un-decoded data transmissions not selected for acknowledgment, wherein the fake HARQ-ACK is sent in response to each of the un-decoded data transmissions in the first group.

11. The apparatus of claim 10, further comprising:
means (846) for sending a HARQ non-acknowledgement, HARQ-NACK, in response to each of the un-decoded data transmissions in the second group.

12. The apparatus of claim 9, further comprising:
means (850) for sending a plurality of radio link control, RLC, status reports to the base station with different transmission periodicities;
wherein the RLC status reports comprise a first RLC status report indicating the un-decoded data transmissions and a second RLC status report sent in response to data retransmissions from the base station, wherein the data retransmissions are received from the base station in response to the first RLC status report.

13. The apparatus of claim 12, wherein the different transmission periodicities are based on a reception time difference between one of the un-decoded data transmissions and one of the data retransmissions; or
wherein the different transmission periodicities are based on a number of the un-decoded data transmissions and a number of the data retransmissions.

14. The apparatus of claim 12, further comprising:
means (852) for modifying a reassembly timer in response to the data retransmissions, wherein the different transmission periodicities are based on the modified reassembly timer; or
means (854) for modifying a status prohibit timer in response to the data retransmissions, wherein the different transmission periodicities are based on the modified status prohibit timer.

15. The apparatus of claim 12, further comprising:
means (848) for resuming the SRS transmission from the different antennas,
wherein the fake HARQ-ACK is sent in response to un-decoded data transmissions selected for acknowledgment and the RLC status reports are sent with the different transmission periodicities for a period of time after resuming the SRS transmission.

## Patentansprüche

1. Ein Verfahren (700) für eine drahtlose Kommunikation durch ein Benutzergerät (User Equipment bzw. UE), das konfiguriert ist für einen Betrieb in einem 3GPP-System, aufweisend:
Senden (702) einer Vielzahl von Sondierungsreferenzsignalen (SRSs) an eine Basisstation in einem ersten Netz unter Verwendung eines ersten Teilnehmeridentitätsmoduls (Subscriber Identity Module bzw. SIM) des UE, wobei jedes der SRSs unter Verwendung einer anderen Antenne gesendet wird,
Aussetzen (704) einer SRS-Sendung von den verschiedenen Antennen während des Durchführens einer Aktivität in einem zweiten Netz unter Verwendung eines zweiten SIM des UE,
**dadurch gekennzeichnet, dass** das Verfahren weiterhin aufweist:
Senden (706) einer gefälschten HARQ (Hybrid Automatic Repeat Request)-Bestätigung (HARQ-ACK) an die Basisstation in Antwort auf wenigstens eine aus einer Vielzahl von nicht-decodierten Datensendungen, die von der Basisstation empfangen werden, während die SRS-Sendung ausgesetzt ist.

2. Verfahren nach Anspruch 1, wobei die nicht-decodierten Datensendungen eine erste Gruppe von nicht-decodierten Datensendungen, die für eine Bestätigung ausgewählt sind, und eine zweite Gruppe von nicht-decodierten Datensendungen, die nicht für eine Bestätigung ausgewählt sind, aufweisen, wobei die gefälschte HARQ-ACK in Antwort auf jede der nicht-decodierten Datensendungen in der ersten Gruppe gesendet wird.

3. Verfahren nach Anspruch 2, das weiterhin aufweist:
Senden (708) einer HARQ-Negativbestätigung (HARQ-NACK) in Antwort auf jede der nicht-decodierten Datensendungen in der zweiten Gruppe.

4. Verfahren nach Anspruch 1, das weiterhin aufweist:
Senden (712) einer Vielzahl von Funkverbindungssteuerung (Radio Link Control bzw. RLC)-Statusberichten an die Basisstation mit verschiedenen Sendeperiodizitäten,
wobei die RLC-Statusberichte einen ersten RLC-Statusbericht, der die nicht-decodierten Datensendungen angibt, und einen zweiten RLC-Statusbericht, der in Antwort auf erneute Datensendungen von der Basisstation gesendet wird, aufweisen, wobei die erneuten Datensendungen von der Basisstation in Antwort auf den ersten RLC-Statusbericht empfangen werden.

5. Verfahren nach Anspruch 4, wobei die verschiedenen Sendeperiodizitäten auf einer Empfangszeitdifferenz zwischen einer der nicht-decodierten Datensendungen und einer der erneuten Datensendungen basieren.

6. Verfahren nach Anspruch 4, wobei die verschiedenen Sendeperiodizitäten auf der Anzahl von nicht-decodierten Datensendungen und der Anzahl der erneuten Datensendungen basieren.

7. Verfahren nach Anspruch 4, das weiterhin aufweist:
Modifizieren (714) eines Neuzusammenstellung-Timers in Antwort auf die erneuten Datensendungen, wobei die verschiedenen Sendeperiodizitäten auf dem modifizierten Neuzusammenstellung-Timer basieren, oder
Modifizieren (716) eines Statusunterbindung-Timers in Antwort auf die erneuten Datensendungen, wobei die verschiedenen Sendeperiodizitäten auf dem modifizierten Statusunterbindung-Timer basieren.

8. Verfahren nach Anspruch 4, das weiterhin aufweist:
Wiederaufnehmen (710) der SRS-Sendung von den verschiedenen Antennen,
wobei die gefälschte HARQ-ACK in Antwort auf nicht-dekodierte Datensendungen, die für eine Bestätigung ausgewählt sind, gesendet wird und die RLC-Statusberichte mit den verschiedenen Sendeperiodizitäten für eine Zeitperiode nach dem Wiederaufnehmen der SRS-Sendung gesendet werden.

9. Eine Vorrichtung (802) für eine drahtlose Kommunikation, die konfiguriert ist für einen Betrieb in einem 3GPP-System, aufweisend:
Mittel (840) zum Senden einer Vielzahl von Sondierungsreferenzsignalen (SRSs) an eine Basisstation in einem ersten Netz unter Verwendung eines ersten Teilnehmeridentitätsmoduls (Subscriber Identity Module bzw. SIM) der Vorrichtung, wobei jedes der SRSs unter Verwendung einer anderen Antenne gesendet wird,
Mittel (842) zum Aussetzen einer SRS-Sendung von den verschiedenen Antennen während des Durchführens einer Aktivität in einem zweiten Netz unter Verwendung eines zweiten SIM der Vorrichtung,
**dadurch gekennzeichnet, dass** die Vorrichtung weiterhin aufweist:
Mittel (844) zum Senden einer gefälschten HARQ (Hybrid Automatic Repeat Request)-Bestätigung (HARQ-ACK) an die Basisstation in Antwort auf wenigstens eine aus einer Vielzahl von nicht-decodierten Datensendungen, die von der Basisstation empfangen werden, während die SRS-Sendung ausgesetzt ist.

10. Vorrichtung nach Anspruch 9, wobei die nicht-decodierten Datensendungen eine erste Gruppe von nicht-decodierten Datensendungen, die für eine Bestätigung ausgewählt sind, und eine zweite Gruppe von nicht-decodierten Datensendungen, die nicht für eine Bestätigung ausgewählt sind, aufweisen, wobei die gefälschte HARQ-ACK in Antwort auf jede der nicht-decodierten Datensendungen in der ersten Gruppe gesendet wird.

11. Vorrichtung nach Anspruch 10, die weiterhin aufweist:
Mittel (846) zum Senden einer HARQ-Negativbestätigung (HARQ-NACK) in Antwort auf jede der nicht-decodierten Datensendungen in der zweiten Gruppe.

12. Vorrichtung nach Anspruch 9, die weiterhin aufweist:
Mittel (850) zum Senden einer Vielzahl von Funkverbindungssteuerung (Radio Link Control bzw. RLC)-Statusberichten an die Basisstation mit verschiedenen Sendeperiodizitäten,
wobei die RLC-Statusberichte einen ersten RLC-Statusbericht, der die nicht-decodierten Datensendungen angibt, und einen zweiten RLC-Statusbericht, der in Antwort auf erneute Datensendungen von der Basisstation gesendet wird, aufweisen, wobei die erneuten Datensendungen von der Basisstation in Antwort auf den ersten RLC-Statusbericht empfangen werden.

13. Vorrichtung nach Anspruch 12, wobei die verschiedenen Sendeperiodizitäten auf einer Empfangszeitdifferenz zwischen einer der nicht-decodierten Datensendungen und einer der erneuten Datensendungen basieren, oder
wobei die verschiedenen Sendeperiodizitäten auf der Anzahl der nicht-decodierten Datensendungen und der Anzahl der erneuten Datensendungen basieren.

14. Vorrichtung nach Anspruch 12, die weiterhin aufweist:
Mittel (852) zum Modifizieren eines Neuzusammenstellung-Timers in Antwort auf die erneuten Datensendungen, wobei die verschiedenen Sendeperiodizitäten auf dem modifizierten Neuzusammenstellung-Timer basieren, oder
Mittel (854) zum Modifizieren eines Statusunterbindung-Timers in Antwort auf die erneuten Datensendungen, wobei die verschiedenen Sendeperiodizitäten auf dem modifizierten Statusunterbindung-Timer basieren.

15. Vorrichtung nach Anspruch 12, die weiterhin aufweist:
Mittel (848) zum Wiederaufnehmen der SRS-Sendung von den verschiedenen Antennen,
wobei die gefälschte HARQ-ACK in Antwort auf nicht-dekodierte Datensendungen, die für eine Bestätigung ausgewählt sind, gesendet wird und die RLC-Statusberichte mit den verschiedenen Sendeperiodizitäten für eine Zeitperiode nach dem Wiederaufnehmen der SRS-Sendung gesendet werden.

## Revendications

1. Procédé (700) de communication sans fil par un équipement d'utilisateur, UE, configuré pour fonctionner dans un système 3GPP, comprenant :
l'envoi (702) d'une pluralité de signaux de référence de sondage, SRS, à une station de base dans un premier réseau en utilisant un premier module d'identité d'abonné, SIM, de l'UE, dans lequel chacun des SRS est envoyé en utilisant une antenne différente ;
la suspension (704) de la transmission SRS à partir des différentes antennes tout en effectuant une activité dans un second réseau en utilisant un second SIM de l'UE ; et
**caractérisé en ce que** le procédé comprend en outre l'envoi (706) d'un faux accusé de réception de demande de répétition automatique hybride, HARQ, HARQ-ACK, à la station de base en réponse à au moins une d'une pluralité de transmissions de données non décodées reçues de la station de base pendant que la transmission SRS est suspendue.

2. Le procédé selon la revendication 1, dans lequel les transmissions de données non décodées comprennent un premier groupe de transmissions de données non décodées sélectionnées pour l'accusé de réception et un deuxième groupe de transmissions de données non décodées non sélectionnées pour l'accusé de réception, dans lequel le faux HARQ-ACK est envoyé en réponse à chacune des transmissions de données non décodées du premier groupe.

3. Le procédé selon la revendication 2, comprenant en outre :
l'envoi (708) d'un non-accusé de réception HARQ, HARQ-NACK, en réponse à chacune des transmissions de données non décodées du deuxième groupe.

4. Le procédé selon la revendication 1, comprenant en outre :
l'envoi (712) d'une pluralité de rapports d'état de commande de liaison radio, RLC, à la station de base avec des périodicités de transmission différentes ;
dans lequel les rapports d'état RLC comprennent un premier rapport d'état RLC indiquant les transmissions de données non décodées et un deuxième rapport d'état RLC envoyé en réponse aux retransmissions de données de la station de base, dans lequel les retransmissions de données sont reçues de la station de base en réponse au premier rapport d'état RLC.

5. Le procédé selon la revendication 4, dans lequel les différentes périodicités de transmission sont basées sur une différence de temps de réception entre l'une des transmissions de données non décodées et l'une des retransmissions de données.

6. Le procédé selon la revendication 4, dans lequel les différentes périodicités de transmission sont basées sur un nombre de transmissions de données non décodées et un nombre de retransmissions de données.

7. Le procédé selon la revendication 4, comprenant en outre :
la modification (714) d'une minuterie de réassemblage en réponse aux retransmissions de données, les différentes périodicités de transmission étant basées sur la minuterie de réassemblage modifiée ;
ou la modification (716) d'une minuterie d'interdiction d'état en réponse aux retransmissions de données, les différentes périodicités de transmission étant basées sur la minuterie d'interdiction d'état modifiée.

8. Le procédé selon la revendication 4, comprenant en outre :
la reprise (710) de la transmission SRS à partir des différentes antennes, dans lequel le faux HARQ-ACK est envoyé en réponse à des transmissions de données non décodées sélectionnées pour l'accusé de réception et les rapports d'état RLC sont envoyés avec les différentes périodicités de transmission pendant une période de temps après la reprise de la transmission SRS.

9. Un appareil (802) de communication sans fil, configuré pour fonctionner dans un système 3GPP, comprenant :
des moyens (840) pour envoyer une pluralité de signaux de référence de sondage, SRS, à une station de base dans un premier réseau en utilisant un premier module d'identité d'abonné, SIM, de l'appareil, dans lequel chacun des SRS est envoyé en utilisant une antenne différente ;
des moyens (842) pour suspendre la transmission SRS à partir des différentes antennes tout en effectuant une activité dans un second réseau en utilisant un second SIM de l'appareil ; et
**caractérisé en ce que** l'appareil comprend en outre des moyens (844) pour envoyer un faux accusé de réception de demande de répétition automatique hybride, HARQ-ACK, à la station de base en réponse à au moins une d'une pluralité de transmissions de données non décodées reçues de la station de base pendant que la transmission SRS est suspendue.

10. L'appareil selon la revendication 9, dans lequel les transmissions de données non décodées comprennent un premier groupe de transmissions de données non décodées sélectionnées pour l'accusé de réception et un second groupe de transmissions de données non décodées non sélectionnées pour l'accusé de réception, dans lequel le faux HARQ-ACK est envoyé en réponse à chacune des transmissions de données non décodées du premier groupe.

11. L'appareil selon la revendication 10, comprenant en outre :
des moyens (846) pour envoyer un non-accusé de réception HARQ, HARQ-NACK, en réponse à chacune des transmissions de données non décodées du deuxième groupe.

12. L'appareil selon la revendication 9, comprenant en outre :
des moyens (850) pour envoyer une pluralité de rapports d'état de commande de liaison radio, RLC, à la station de base avec des périodicités de transmission différentes ;
dans lequel les rapports d'état RLC comprennent un premier rapport d'état RLC indiquant les transmissions de données non décodées et un deuxième rapport d'état RLC envoyé en réponse aux retransmissions de données depuis la station de base, dans lequel les retransmissions de données sont reçues depuis la station de base en réponse au premier rapport d'état RLC.

13. L'appareil selon la revendication 12, dans lequel les différentes périodicités de transmission sont basées sur une différence de temps de réception entre l'une des transmissions de données non décodées et l'une des retransmissions de données ;
ou dans lequel les différentes périodicités de transmission sont basées sur un nombre de transmissions de données non décodées et un nombre de retransmissions de données.

14. L'appareil selon la revendication 12, comprenant en outre :
des moyens (852) pour modifier une minuterie de réassemblage en réponse aux retransmissions de données, les différentes périodicités de transmission étant basées sur la minuterie de réassemblage modifiée ; ou
des moyens (854) pour modifier une minuterie d'interdiction d'état en réponse aux retransmissions de données, les différentes périodicités de transmission étant basées sur la minuterie d'interdiction d'état modifiée.

15. L'appareil selon la revendication 12, comprenant en outre :
des moyens (848) pour reprendre la transmission SRS à partir des différentes antennes, dans lequel le faux HARQ-ACK est envoyé en réponse à des transmissions de données non décodées sélectionnées pour accusé de réception et les rapports d'état RLC sont envoyés avec les différentes périodicités de transmission pendant une période de temps après la reprise de la transmission SRS.
